# EUROPEAN PATENT APPLICATION

(11) **EP 4 727 200 A1**
(43) Date of publication of application: **15.04.2026**
(21) Application number: 24838596.5
(22) Date of filing: 26.06.2024
(51) Int. Cl.: H04W 24/02

(54) **CONNECTION MANAGEMENT METHOD, APPARATUS AND SYSTEM**

(30) Priority: 11.07.2023 CN 202310851669
(71) Applicant: Huawei Technologies Co., Ltd., Shenzhen, Guangdong 518129 (CN)
(72) Inventor: LI, Yongcui, Shenzhen, Guangdong 518129 (CN); XU, Shengfeng, Shenzhen, Guangdong 518129 (CN); LI, Yan, Shenzhen, Guangdong 518129 (CN)
(74) Representative: Gill Jennings & Every LLP
(86) International application number: PCT/CN2024/101621
(87) International publication number: WO 2025/011340

(57) **Abstract**

Embodiments of this application provide a connection management method and apparatus. The method includes: when a data transmission connection of a communication apparatus is disconnected and downlink data of the communication apparatus has not arrived, sending a first request message to a second network element, where the first request message is used to request connection information of the communication apparatus, the connection information is used to obtain information about one or more access network devices, and the one or more access network devices include an access network device that serves the communication apparatus; receiving the connection information from the second network element; and when the downlink data of the communication apparatus arrives, triggering resumption of the data transmission connection of the communication apparatus through the one or more access network devices. According to the method disclosed in this application, in a RAN service-based architecture, connection management on the communication apparatus by the first network element can be effectively implemented.

## Description

This application claims priority to Chinese Patent Application No. 202310851669.0, filed with the China National Intellectual Property Administration on July 11, 2023 and entitled "CONNECTION MANAGEMENT METHOD AND APPARATUS, AND SYSTEM", which is incorporated herein by reference in its entirety.

### TECHNICAL FIELD

This application relates to the communication field, and more specifically, to a communication method and a communication apparatus.

### BACKGROUND

In an existing communication system, when downlink data of a user equipment (user equipment, UE) arrives at a network side, the network side implements connection management on the UE through an access and mobility management function network element (access and mobility management function, AMF), that is, the AMF determines, by determining a connection status of the UE, to page the UE or activate a user plane connection. For example, when the UE is in a connection management-idle (connection management-idle, CM-IDLE) state, the AMF may page the UE through a radio access network (radio access network, RAN), so that the UE changes from the CM-IDLE state to a connection management-connected (connection management-connected, CM-CONNECTED) state, to implement transmission of downlink data. For another example, when the UE is in the CM-CONNECTED state, the AMF may request to activate the user plane connection for data transmission.

In a RAN service-based architecture, a RAN and a core network element may directly communicate with each other through a service-based interface, to implement end-to-end unified orchestration. In this architecture, an existing connection management solution has high signaling overheads and takes long time.

### SUMMARY

This application provides a connection management method and apparatus, to implement connection management on a communication apparatus by a network side in a RAN service-based architecture.

According to a first aspect, a connection management method is provided. The method may be performed by a first network element, or may be performed by a chip or a circuit of the first network element. This is not limited in this application. For ease of description, the following provides descriptions by using an example in which the method is performed by the first network element.

The method includes: when a data transmission connection of a communication apparatus is disconnected and downlink data of the communication apparatus has not arrived, sending a first request message to a second network element, where the first request message is used to request connection information of the communication apparatus, the connection information is used to obtain information about one or more access network devices, and the one or more access network devices include an access network device that serves the communication apparatus; receiving the connection information from the second network element; and when the downlink data of the communication apparatus arrives, triggering resumption of the data transmission connection of the communication apparatus through the one or more access network devices.

In this embodiment of this application, the downlink data may include downlink user plane data or downlink control plane signaling.

According to the solution provided in this application, when the data transmission connection of the communication apparatus is disconnected and the downlink data of the communication apparatus has not arrived, the first network element obtains the connection information of the communication apparatus from the second network element, and when the downlink data or signaling arrives at the first network element, the first network element may directly trigger resumption of the data transmission connection of the communication apparatus through the one or more access network devices indicated by the connection information. Compared with the conventional technology in which the first network element needs to page the communication apparatus through an AMF or activate a user plane connection to implement the connection management method for the communication apparatus, the technical solution of this application can reduce signaling overheads, reduce a quantity of signaling transmission hops, improve efficiency of establishing or resuming a data transmission connection, and reduce a transmission delay of the downlink data.

Optionally, when the data transmission connection of the communication apparatus is disconnected, the first network element may also send the first request message to the second network element. In other words, whether the downlink data of the communication apparatus arrives at a network side before the first network element sends the first request message to the second network element is not particularly limited in this application. Before the downlink data of the communication apparatus arrives at the network side, the first network element sends the first request message to the second network element, so that the transmission delay of the downlink data can be further reduced.

With reference to the first aspect, in some implementations of the first aspect, the first network element is configured to manage the data transmission connection of the communication apparatus, or the first network element is configured to send the downlink data to the communication apparatus through the data transmission connection of the communication apparatus.

For example, the first network element is configured to manage the data transmission connection of the communication apparatus. For example, the first network element is a session management function (session management function, SMF). In this case, the data transmission connection of the communication apparatus may be a connection that is between a user plane function (user plane function, UPF) and a UE and that is used for transmission of user plane data.

For example, the first network element is configured to send the downlink data to the communication apparatus through the data transmission connection of the communication apparatus. For example, the first network element is an SMF. In this case, the SMF may send signaling to the communication apparatus through the data transmission connection.

With reference to the first aspect, in some implementations of the first aspect, the triggering resumption of the data transmission connection of the communication apparatus through the one or more access network devices includes: sending, to the one or more access network devices, a message used to page the communication apparatus; and receiving a second request message from the access network device that serves the communication apparatus, where the second request message is used to request to resume the data transmission connection of the communication apparatus.

Based on the solution, when the communication apparatus is in an idle state, the first network element triggers a procedure of paging the communication apparatus, to implement connection management on the communication apparatus. In this case, the connection information of the communication apparatus obtained by the first network element from the second network element may be a paging area of the communication apparatus, or information about one or more access network devices corresponding to the paging area, so that the first network element can send a paging message to the one or more access network devices.

With reference to the first aspect, in some implementations of the first aspect, the connection information of the communication apparatus is a paging area of the communication apparatus, and the one or more access network devices are located in the paging area.

With reference to the first aspect, in some implementations of the first aspect, the connection information of the communication apparatus is the information about the one or more access network devices, and the one or more access network devices are located in a paging area of the communication apparatus.

Based on the solution, the first network element may determine, by using the connection information of the communication apparatus, the information about the one or more access network devices in the paging area of the communication apparatus, to trigger a paging procedure to the one or more access network devices.

With reference to the first aspect, in some implementations of the first aspect, the connection information of the communication apparatus is information about the access network device that serves the communication apparatus, and the triggering resumption of the data transmission connection of the communication apparatus through the one or more access network devices includes: sending, to the access network device that serves the communication apparatus, a message used to request to resume the data transmission connection of the communication apparatus.

Based on the solution, when the communication apparatus is in a connected state, the first network element triggers a resumption procedure of the data transmission connection of the communication apparatus, to implement connection management on the communication apparatus. In this case, the connection information of the communication apparatus obtained by the first network element from the second network element may be the information about the access network device that serves the communication apparatus, so that the first network element can send a connection resumption request message to the access network device.

With reference to the first aspect, in some implementations of the first aspect, the first request message is further used to request to subscribe to the connection information of the communication apparatus, so that the second network element sends updated connection information of the communication apparatus to the first network element when the connection information of the communication apparatus is updated.

Based on the solution, a subscription request message is sent to the second network element, so that the second network element can send the updated connection information of the communication apparatus to the first network element when the connection information of the communication apparatus is updated. In other words, when determining that the connection information of the communication apparatus changes, the second network element may send the updated connection information of the communication apparatus to the first network element in time. Therefore, the first network element may obtain the latest connection information of the communication apparatus, thereby facilitating subsequent effective connection management on the communication apparatus, and improving efficiency.

With reference to the first aspect, in some implementations of the first aspect, when the data transmission connection of the communication apparatus is resumed, the subscription is canceled from the second network element.

With reference to the first aspect, in some implementations of the first aspect, the second network element is configured to perform connection management on the communication apparatus, and before the sending the first request message to the second network element, the method further includes: sending a third request message to a third network element, where the third request message is used to request information about a network element that performs connection management on the communication apparatus; and receiving information about the second network element from the third network element, where the sending the first request message to the second network element includes: sending the first request message to the second network element based on the information about the second network element.

Based on the solution, the first network element may first obtain the information about the second network element from the third network element, and then request to obtain the connection information of the communication apparatus from the second network element. This provides a new implementation and has better flexibility.

With reference to the first aspect, in some implementations of the first aspect, the third request message is further used to request to subscribe to the information about the network element that performs connection management on the communication apparatus, so that the third network element sends updated information about the network element, that is, the information about the second network element, to the first network element when the information about the network element that performs connection management on the communication apparatus is updated.

Based on the solution, a subscription request message is sent to the third network element, so that the third network element can send updated information about the second network element to the first network element when the information about the second network element is updated. In other words, when determining that the information about the second network element changes, that is, when the information about the network element that performs connection management on the communication apparatus changes, the third network element may send the updated information about the second network element to the first network element in time. Therefore, the first network element may obtain the latest information about the second network element, and then send a request message to the updated second network element, to obtain the connection information of the communication apparatus. This facilitates subsequent effective connection management on the communication apparatus, and improves efficiency.

With reference to the first aspect, in some implementations of the first aspect, when the data transmission connection of the communication apparatus is resumed, the subscription is canceled from the third network element.

With reference to the first aspect, in some implementations of the first aspect, before the receiving the second request message from the access network device that serves the communication apparatus, the method further includes: sending information about the first network element to the second network element, where the information about the first network element is used by the access network device that serves the communication apparatus to determine that a network element that triggers paging on the communication apparatus is the first network element.

With reference to the first aspect, in some implementations of the first aspect, the message used to page the communication apparatus includes information about the first network element, and the information about the first network element is used by the access network device that serves the communication apparatus to determine that a network element that triggers paging on the communication apparatus is the first network element.

Based on the solution, the first network element sends the information about the first network element to the second network element, so that the access network device can subsequently query the information about the first network element from the second network element, to determine that the network element configured to trigger paging on the communication apparatus is the first network element, and can further send a connection resumption request to the first network element, to implement connection management on the communication apparatus by the first network element.

According to a second aspect, a connection management method is provided. The method may be performed by an access network device that serves a communication apparatus, or may be performed by a chip or a circuit of the access network device that serves the communication apparatus. This is not limited in this application. For ease of description, the following provides descriptions by using an example in which the method is performed by the access network device that serves the communication apparatus.

The method includes: in a process of resuming a data transmission connection of the communication apparatus, obtaining information about a first network element, where the first network element is a network element that triggers paging on the communication apparatus; and sending, to the first network element, a message used to request to resume the data transmission connection of the communication apparatus.

According to the solution provided in this application, the information about the first network element that triggers paging on the communication apparatus is obtained, and the first network element is requested to resume the data connection of the communication apparatus. To be specific, in a RAN service-based architecture scenario, there is an interface between the first network element and the access network device that serves the communication apparatus, and the access network device may send a connection resumption request to the first network element based on the obtained information about the first network element, to implement connection management on the communication apparatus by the first network element. This can reduce signaling overheads, reduce a quantity of signaling transmission hops, improve efficiency of establishing or resuming the data transmission connection, and reduce a transmission delay of downlink data.

With reference to the second aspect, in some implementations of the second aspect, the obtaining the information about the first network element includes: sending a query message to a second network element, where the query message is used to query information about the network element that triggers paging on the communication apparatus; and receiving the information about the first network element from the second network element.

For example, the query message includes an identifier of the communication apparatus, for example, a UE ID, or a paging identifier of a UE, and the identifier of the communication apparatus is used to identify the communication apparatus.

With reference to the second aspect, in some implementations of the second aspect, before the obtaining the information about the first network element, the method includes: receiving, from the first network element, a message used to trigger paging on the communication apparatus, where the message includes a paging identifier of the communication apparatus and the information about the first network element; and storing an association relationship between the paging identifier and the information about the first network element.

The obtaining the information about the first network element includes: receiving a request message from the communication apparatus, where the request message includes the paging identifier, and the request message is used to request to resume the data transmission connection of the communication apparatus; and determining the information about the first network element based on the association relationship and the paging identifier in the request message.

With reference to the second aspect, in some implementations of the second aspect, the obtaining the information about the first network element includes: receiving a request message from the communication apparatus, where the request message includes the information about the first network element, and the request message is used to request to resume the data transmission connection of the communication apparatus.

For beneficial effect of the second aspect and some implementations of the second aspect, correspondingly refer to the related descriptions of the first aspect. Details are not described herein again.

According to a third aspect, a connection management method is provided. The method may be performed by a second network element, or may be performed by a chip or a circuit of the second network element. This is not limited in this application. For ease of description, the following provides descriptions by using an example in which the method is performed by the second network element. The second network element is configured to perform connection management on a communication apparatus.

The method includes: receiving a first request message from a first network element, where the first request message is used to request connection information of the communication apparatus, the connection information is used to obtain information about one or more access network devices, and the one or more access network devices include an access network device that serves the communication apparatus; and sending the connection information of the communication apparatus to the first network element based on a status of the communication apparatus, so that when downlink data of the communication apparatus arrives, the first network element triggers resumption of a data transmission connection of the communication apparatus through the one or more access network devices.

In this embodiment of this application, the downlink data may include downlink user plane data or downlink control plane signaling.

According to the solution provided in this application, the connection information of the communication apparatus that is sent to the first network element is determined based on a received request message and a status of the communication apparatus. To be specific, in a RAN service-based architecture scenario, the first network element and the second network element exchange the connection information of the communication apparatus, so that the first network element subsequently implements connection management on the communication apparatus. This can reduce signaling overheads, reduce a quantity of signaling transmission hops, improve efficiency of establishing or resuming the data transmission connection, and reduce a transmission delay of the downlink data.

With reference to the third aspect, in some implementations of the third aspect, the sending the connection information of the communication apparatus to the first network element based on the status of the communication apparatus includes: when the communication apparatus is in a connected state, sending, to the first network element, information about the access network device that serves the communication apparatus; or when the communication apparatus is in an idle state, sending, to the first network element, information used to obtain the one or more access network devices, where the one or more access network devices are configured to page the communication apparatus; or when the communication apparatus is in an idle state, skipping sending the connection information of the communication apparatus to the first network element.

With reference to the third aspect, in some implementations of the third aspect, the sending, to the first network element, the information used to obtain the one or more access network devices includes: sending a paging area of the communication apparatus to the first network element, where the one or more access network devices are located in the paging area.

With reference to the third aspect, in some implementations of the third aspect, the sending, to the first network element, the information used to obtain the one or more access network devices includes: sending the information about the one or more access network devices to the first network element, where the one or more access network devices are located in a paging area of the communication apparatus.

With reference to the third aspect, in some implementations of the third aspect, when the communication apparatus is in the idle state, and the connection information of the communication apparatus is not sent to the first network element, the method further includes: receiving, from the first network element, a message used to notify that data of the communication apparatus arrives; and sending, to the one or more access network devices based on the message, a message used to page the communication apparatus, where the one or more access network devices are located in the paging area of the communication apparatus.

With reference to the third aspect, in some implementations of the third aspect, before the receiving the first request message from the first network element, the method further includes: sending an identifier of the communication apparatus and information about the second network element to a third network element, where the information about the second network element is used by the third network element to determine a network element that performs connection management on the communication apparatus.

With reference to the third aspect, in some implementations of the third aspect, a query message is received from the access network device that serves the communication apparatus, where the query message is used to query information about a network element that triggers paging on the communication apparatus, and the query message includes the identifier of the communication apparatus; and information about the first network element is sent to the access network device based on the identifier of the communication apparatus in the query message and an association relationship between the identifier of the communication apparatus and the information about the first network element.

With reference to the third aspect, in some implementations of the third aspect, before the query message is received from the access network device that serves the communication apparatus, the identifier of the communication apparatus and the information about the first network element are received from the first network element; and the association relationship between the identifier of the communication apparatus and the information about the first network element is stored.

For beneficial effect of the third aspect and some implementations of the third aspect, correspondingly refer to the related descriptions of the first aspect. Details are not described herein again.

According to a fourth aspect, a connection management method is provided. The method may be performed by a communication apparatus or a chip or a circuit of the communication apparatus. Optionally, the communication apparatus may be a terminal device, for example, a mobile phone, a vehicle, an uncrewed aerial vehicle, or a wearable device, or may be a chip or a circuit of the terminal device. In addition, the terminal device may also be referred to as a user equipment. Therefore, the communication apparatus may alternatively be the user equipment or a chip or a circuit in the user equipment. This is not specifically limited in this application.

The method includes: in a process of resuming a data transmission connection of the communication apparatus, receiving, from an access network device, a message for paging the communication apparatus, where the message includes information about a first network element, and the first network element is a network element that triggers paging on the communication apparatus; and sending, to the access network device, a message used to request to resume the data transmission connection of the communication apparatus, where the message includes the information about the first network element.

According to the solution provided in this application, the communication apparatus requests, based on a received paging message, the access network device to resume the data transmission connection of the communication apparatus. To be specific, in a RAN service-based architecture scenario, a connection resumption request is transmitted between the communication apparatus and the access network device, so that the access network device sends, to the first network element, a message used to resume the data transmission connection of the communication apparatus, to implement connection management on the communication apparatus by the first network element. This can reduce signaling overheads, reduce a quantity of signaling transmission hops, improve efficiency of establishing or resuming the data transmission connection, and reduce a transmission delay of downlink data.

According to a fifth aspect, a connection management apparatus is provided, for example, a first network element. The first network element includes: a transceiver unit, configured to: when a data transmission connection of a communication apparatus is disconnected and downlink data of the communication apparatus has not arrived, send a first request message to a second network element, where the first request message is used to request connection information of the communication apparatus, the connection information is used to obtain information about one or more access network devices, and the one or more access network devices include an access network device that serves the communication apparatus, where the transceiver unit is further configured to receive the connection information from the second network element; and a processing unit, configured to: when the downlink data of the communication apparatus arrives, trigger resumption of the data transmission connection of the communication apparatus through the one or more access network devices.

The transceiver unit may perform receiving and sending in the first aspect, and the processing unit may perform processing other than receiving and sending in the first aspect.

According to a sixth aspect, a connection management apparatus is provided, for example, an access network device that serves a communication apparatus. The access network device includes: a processing unit, configured to: in a process of resuming a data transmission connection of the communication apparatus, obtain information about a first network element, where the first network element is a network element that triggers paging on the communication apparatus; and a transceiver unit, configured to send, to the first network element, a message used to request to resume the data transmission connection of the communication apparatus.

The transceiver unit may perform receiving and sending in the second aspect, and the processing unit may perform processing other than receiving and sending in the second aspect.

According to a seventh aspect, a connection management apparatus is provided, for example, a second network element. The second network element includes: a transceiver unit, configured to receive a first request message from a first network element, where the first request message is used to request connection information of a communication apparatus, the connection information is used to obtain information about one or more access network devices, and the one or more access network devices include an access network device that serves the communication apparatus, where the transceiver unit is further configured to send the connection information of the communication apparatus to the first network element based on a status of the communication apparatus, so that when downlink data of the communication apparatus arrives, the first network element triggers resumption of a data transmission connection of the communication apparatus through the one or more access network devices.

The transceiver unit may perform receiving and sending in the third aspect, and the processing unit may perform processing other than receiving and sending in the third aspect.

According to an eighth aspect, a communication apparatus is provided. The communication apparatus includes: a transceiver unit, configured to: in a process of resuming a data transmission connection of the communication apparatus, receive, from an access network device, a message for paging the communication apparatus, where the message includes information about a first network element, and the first network element is a network element that triggers paging on the communication apparatus, where the transceiver unit is further configured to send, to the access network device, a message used to request to resume the data transmission connection of the communication apparatus, where the message includes the information about the first network element.

The transceiver unit may perform receiving and sending in the fourth aspect, and the processing unit may perform processing other than receiving and sending in the fourth aspect.

According to a ninth aspect, a connection management apparatus is provided, including a processor. The processor is coupled to a memory, the memory is configured to store a computer program, and the processor is configured to invoke the computer program from the memory and run the computer program, to enable the apparatus to perform the method according to any one of the first aspect to the fourth aspect and the possible implementations of the first aspect to the fourth aspect.

Optionally, there are one or more processors, and there are one or more memories.

Optionally, the memory may be integrated with the processor, or the memory and the processor are separately disposed.

Optionally, the connection management apparatus further includes a transceiver.

According to a tenth aspect, a communication system is provided, including a first network element and a second network element. The first network element is configured to perform the method according to any one of the first aspect and the possible implementations of the first aspect, and the second network element is configured to perform the method according to any one of the third aspect and the possible implementations of the third aspect.

Optionally, the communication system further includes an access network device. The access network device is configured to perform the method according to any one of the second aspect and the possible implementations of the second aspect.

Optionally, the communication system further includes a communication apparatus, configured to perform the method according to any one of the fourth aspect and the possible implementations of the fourth aspect.

According to an eleventh aspect, a computer-readable storage medium is provided. The computer-readable storage medium stores a computer program or code. When the computer program or code is run on a computer, the computer is enabled to perform the method according to any one of the first aspect to the fourth aspect and the possible implementations of the first aspect to the fourth aspect.

According to a twelfth aspect, a chip is provided, including at least one processor. The at least one processor is coupled to a memory. The memory is configured to store a computer program. The processor is configured to invoke the computer program from the memory and run the computer program, to enable an apparatus in which the chip system is installed to perform the method according to any one of the first aspect to the fourth aspect and the possible implementations of the first aspect to the fourth aspect.

The chip may include an input circuit or interface for sending information or data, and an output circuit or interface for receiving information or data.

According to a thirteenth aspect, a computer program product is provided. The computer program product includes computer program code. When the computer program code is run on a computer, the computer is enabled to perform the method according to any one of the first aspect to the fourth aspect and the possible implementations of the first aspect to the fourth aspect.

### BRIEF DESCRIPTION OF DRAWINGS

FIG. 1 is a diagram of a network architecture 100;
FIG. 2 is a diagram of a paging procedure method 200;
FIG. 3 is a diagram of a network architecture 300 to which an embodiment of this application is applicable;
FIG. 4 is a schematic flowchart of a connection management method 400 according to an embodiment of this application;
FIG. 5A to FIG. 5C are a schematic flowchart of a connection management method 500 according to an embodiment of this application;
FIG. 6 is a schematic flowchart of a connection management method 600 according to an embodiment of this application;
FIG. 7A to FIG. 7C are a schematic flowchart of a connection management method 700 according to an embodiment of this application;
FIG. 8 is a diagram of a structure of a connection management apparatus 1000 according to an embodiment of this application;
FIG. 9 is a diagram of a structure of a connection management apparatus 2000 according to an embodiment of this application; and
FIG. 10 is a diagram of a structure of a chip system 3000 according to an embodiment of this application.

### DESCRIPTION OF EMBODIMENTS

The following describes technical solutions of this application with reference to accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In a communication system, a part operated by an operator may be referred to as a public land mobile network (public land mobile network, PLMN), which may also be referred to as an operator network or the like. The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in embodiments of this application may be specifically a network compliant with a requirement of the 3rd generation partnership project (3rd generation partnership project, 3GPP) standard, which is referred to as a 3GPP network for short. The 3GPP network usually includes but is not limited to a 5th generation (5th generation, 5G) mobile communication network, a 4th generation (4th generation, 4G) mobile communication network, and another future communication system like a 6th generation (6th generation, 6G) mobile communication network.

For ease of description, the PLMN or the 5G network is used as an example for description in embodiments of this application.

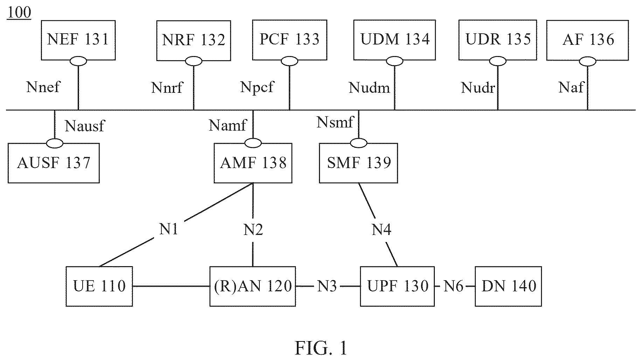

FIG. 1 is a diagram of a network architecture 100. A 5G network architecture based on a service-based architecture (service-based architecture, SBA) in a non-roaming scenario defined in a 3GPP standardization process is used as an example. As shown in FIG. 1, the network architecture may include a terminal device part, a data network (data network, DN) part, and an operator network PLMN part. The operator network PLMN part may include but is not limited to a (radio) access network ((radio) access network, (R)AN) 120 and a core network (core network, CN) part.

The following briefly describes a function of a network element of each part.

The terminal device part may include a terminal device 110. The terminal device 110 is a device that provides voice and/or data connectivity for a user. The terminal device 110 may also be referred to as a user equipment UE. The terminal device 110 in this application is a device having a wireless transceiver function, and may communicate with one or more core network (core network, CN) devices through an access network device (which may also be referred to as an access device) in the (radio) access network (R)AN 120. The terminal device 110 may also be referred to as an access terminal, a terminal, a subscriber unit, a subscriber station, a mobile station, a remote station, a remote terminal, a mobile device, a user terminal, a user agent, a user apparatus, or the like. The terminal device 110 may be deployed on land, and include an indoor terminal device, an outdoor terminal device, a handheld terminal device, or a vehicle-mounted terminal device; may be deployed on a water surface (for example, on a ship); or may be deployed in the air (for example, on an aircraft, a balloon, or a satellite). The terminal device 110 may be a cellular phone, a cordless phone, a session initiation protocol (session initiation protocol, SIP) phone, a smartphone, a mobile phone, a wireless local loop (wireless local loop, WLL) station, a personal digital assistant (personal digital assistant, PDA), or the like. Alternatively, the terminal device 110 may be a handheld device having a wireless communication function, a computing device, another device connected to a wireless modem, a vehicle-mounted device, a wearable device, an uncrewed aerial vehicle device, a terminal in the internet of things or internet of vehicles, a terminal in any form in a 5G network or a future network, a relay user equipment, a terminal in a future evolved 6G network, or the like. The relay user equipment may be, for example, a 5G residential gateway (residential gateway, RG). For example, the terminal device 110 may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in transportation security, a wireless terminal in a smart city, a wireless terminal in a smart home, or the like. The terminal device herein is a 3GPP terminal. A type or the like of the terminal device is not limited in embodiments of this application. For ease of description, in this application, an example in which the UE represents the terminal device is used for description below.

The (R)AN 120 may include one or more access network elements or access network devices. An interface between the access network device and the terminal device may be a Uu interface (or referred to as an air interface, that is, a message exchanged between the access network device and the terminal device may be referred to as an air interface message). Certainly, in future communication, names of these interfaces may remain unchanged, or may be replaced with other names. This is not limited in this application. The (R)AN 120 is a device that provides a wireless communication function for the terminal device 110, and may connect the terminal device to a node or device in a wireless network, and may also be referred to as a network device. The (R)AN 120 may be considered as a sub-network of an operator network, and is an implementation system between a service node in the operator network and the terminal device 110. For example, the terminal device 110 may be connected to the service node in the operator network through the (R)AN 120, to obtain a service provided by the service node. The (R)AN 120 includes but is not limited to a next generation NodeB (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmitting and receiving point (transmitting and receiving point, TRP), a transmitting point (transmitting point, TP), a small base station device, a mobile switching center, a network device in a future network, or the like. The access network device may alternatively be a module or unit that completes a function of a base station, for example, includes a central unit (central unit, CU) and a distributed unit (distributed unit, DU). In a possible network structure, the CU may be configured to support communication in protocols such as radio resource control (radio resource control, RRC), a packet data convergence protocol (packet data convergence protocol, PDCP), and a service data adaptation protocol (service data adaptation protocol, SDAP). The DU may be configured to support communication in a radio link control (radio link control, RLC) layer protocol, a medium access control (medium access control, MAC) layer protocol, and a physical layer protocol. A specific technology and a specific device form that are used by the access network device are not limited in embodiments of this application. In systems using different radio access technologies, devices having functions of the access network device may have different names. For ease of description, in all embodiments of this application, the foregoing apparatuses that provide the wireless communication function for the terminal device 110 are collectively referred to as access network devices, or referred to as RANs for short. It should be understood that a specific type of the access network device is not limited in this specification.

The CN part may include but is not limited to the following network functions (network functions, NFs): a user plane function (user plane function, UPF) 130, a network exposure function (network exposure function, NEF) 131, a network function repository function (network function repository function, NRF) 132, a policy control function (policy control function, PCF) 133, a unified data management (unified data management, UDM) function 134, a unified data repository (unified data repository, UDR) function 135, an application function (application function, AF) 136, an authentication server function (authentication server function, AUSF) 137, an access and mobility management function (access and mobility management function, AMF) 138, and a session management function (session management function, SMF) 139.

A data network DN 140 may also be referred to as a packet data network (packet data network, PDN), and is usually a network located outside the operator network, for example, a third-party network.

The following further briefly describes the NF functions included in the CN.
1. The UPF 130 is a gateway provided by an operator, and is a gateway for communication between the operator network and the DN 140. The UPF network function 130 includes user plane-related functions such as data packet routing and transmission, data packet detection, traffic usage reporting, quality of service (quality of service, QoS) handling, lawful interception, uplink data packet detection, and downlink data packet storage. For example, the UPF is responsible for forwarding and receiving user data in the terminal device 110. The UPF 130 may receive user data from the DN 140, and transmit the user data to the terminal device 110 through the access network device 120. The UPF 130 may further receive user data from the terminal device 110 through the access network device 120, and forward the user data to the DN 140. Transmission resources and scheduling functions that are used by the UPF 130 to provide services for the terminal device 110 are managed and controlled by the SMF 139.
2. The NEF 131 is a control plane function provided by the operator, mainly enables a third party to use a service provided by a network, supports the network in exposing a capability, an event, and data analysis of the network, provides security configuration information for the PLMN from an external application, provides conversion of information exchanged inside and outside the PLMN, and the like.
3. The NRF 132 is a control plane function provided by the operator, and may be configured to maintain real-time information of a network function and a service in a network.
4. The PCF 133 is a control plane function provided by the operator, mainly supports providing a unified policy framework to control a network behavior, providing a policy rule for a control layer network function, and is responsible for obtaining user subscription information related to policy decision. For example, the PCF 133 may be divided into two PCFs having different functions, which are respectively a UE-PCF and an AMF-PCF.
5. The UDM 134 is a control plane function provided by the operator, and is responsible for storage of a subscriber permanent identifier (subscriber permanent identifier, SUPI) of a subscriber of the operator network, a generic public subscription identifier (generic public subscription identifier, GPSI) of the subscriber, a credential (credential), and other information.
6. The UDR 135 is a control plane function provided by the operator, and provides a function of storing and obtaining subscription data for the UDM, provides a function of storing and obtaining policy data for the PCF, stores and obtains NF group ID (group ID) information of a user, and the like.
7. The AF 136 is a control plane function provided by the operator, and mainly interacts with another NF in the PLMN to provide a corresponding service, for example, provide visited network selection information for roaming UE, guide routing of a data flow, and access the NEF 131.
8. The AUSF 137 is a control plane function provided by the operator, and is usually used for primary authentication, that is, authentication between the terminal device 110 (a subscriber) and the operator network.
9. The AMF 138 is a control plane network function provided by the operator network, and is responsible for access control and mobility management when the terminal device 110 accesses the operator network, for example, including functions such as mobility status management, allocation of a temporary user identity, and user authentication and authorization.
10. The SMF 139 is a control plane network function provided by the operator network, is responsible for managing a protocol data unit (protocol data unit, PDU) session (including session establishment, modification, and release) of the terminal device 110, and is used for selection and reselection of a user plane function network element, internet protocol (internet protocol, IP) address allocation of the terminal device, quality of service (quality of service, QoS) control, and the like. The PDU session is a channel used to transmit a PDU, and the terminal device and the DN 140 need to transmit the PDU to each other through the PDU session. The SMF network function 139 is responsible for establishment, maintenance, deletion, and the like of the PDU session. The SMF network function 139 includes session-related functions such as session management (for example, session establishment, modification, and release, including tunnel maintenance between the user plane function UPF 130 and the (R)AN 120), selection and control of the UPF network function 130, service and session continuity (service and session continuity, SSC) mode selection, and roaming.

It may be understood that the foregoing network elements or functions may be physical entities in a hardware device, software instances running on dedicated hardware, or virtualized functions instantiated on a sharing platform (for example, a cloud platform). In short, an NF may be implemented by hardware or software.

In FIG. 1, Nnef, Nnrf, Npcf, Nudm, Nudr, Naf, Nausf, Namf, Nsmf, N1, N2, N3, N4, and N6 are interface sequence numbers. For example, for meanings of the interface sequence numbers, refer to meanings defined in the 3GPP standard protocol. The meanings of the interface sequence numbers are not limited in this application. It should be noted that a name of an interface between the network functions in FIG. 1 is merely an example. In specific implementation, the name of the interface in the system architecture may alternatively be another name. This is not limited in this application. In addition, names of messages (or signaling) transmitted between the foregoing network elements are also merely examples, and do not constitute any limitation on functions of the messages.

It should be noted that in the architecture shown in FIG. 1, an interface between the (R)AN and the CN may also be referred to as an NG interface (not shown in the figure), and the (R)AN and the CN are connected through the NG interface. The NG interface may include an NG-C interface and an NG-U interface. The NG-C interface is a control plane interface, connecting the (R)AN and the AMF, and is configured to transmit control plane data. The NG-U interface is a user plane interface, connecting the (R)AN and the UPF, and is configured to transmit user plane data.

It should be understood that the network architecture 100 is merely a network architecture described from a perspective of a service-based architecture. In the service-based architecture, the PLMN may orderly combine some or all network functions based on a specific scenario requirement, to implement customization of a network capability and a service, to deploy dedicated networks for different services, that is, implement 5G network slicing (network slicing). With a network slicing technology, the operator can respond to customer requirements more flexibly and quickly and support flexible allocation of network resources.

For ease of description, in embodiments of this application, a network function (such as the NEF 131, ..., and the SMF 139) is collectively/briefly referred to as an NF. In other words, the NF described below in embodiments of this application may be replaced with any network function. In addition, in embodiments of this application, the session management function SMF 139 is referred to as an SMF for short, and the terminal device 110 is referred to as a UE. In other words, in embodiments of this application, the SMF described below may be replaced with the session management function, and the UE may be replaced with the terminal device. FIG. 1 describes only some network functions as an example, and the NF described below is not limited to the network functions shown in FIG. 1.

It should be further understood that the AMF, the SMF, the UPF, the NEF, the AUSF, the NRF, the PCF, and the UDM shown in FIG. 1 may be understood as network elements configured to implement different functions in the core network, for example, may be combined as required to form a network slice. These core network elements may be independent devices, or may be integrated into a same device to implement different functions. A specific form of the foregoing network elements is not limited in this application.

It should be further understood that the foregoing names are defined merely for distinguishing between different functions, and should not constitute any limitation on this application. This application does not exclude a possibility that another name is used in the 5G network and another future network. For example, in the 6G network, some or all of the foregoing network elements may still use terms in 5G, or may use other names.

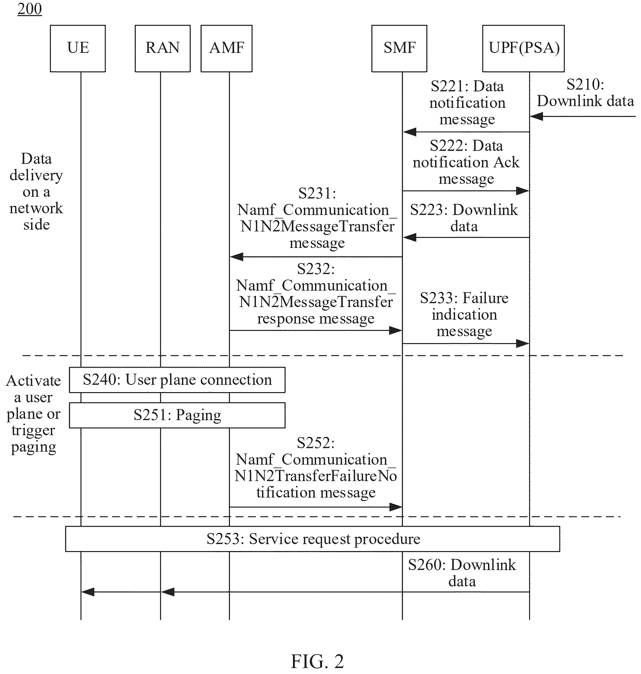

With reference to FIG. 2, the following specifically describes connection management and connection management performed by the AMF on the UE in different states.

A 5G connection management status model includes two states: CM-IDLE and CM-CONNECTED. The CM-IDLE state indicates that a user (namely, the UE) in the CM-IDLE state has no non access stratum (non access stratum, NAS) signaling connection, no N2 signaling connection, and no N3 user plane connection. When a user served by the AMF enters the CM-IDLE state, the AMF may perform a service request procedure triggered by a network side, for example, send a paging request to the user. The CM-CONNECTED state indicates that the user has an N2 signaling connection and a NAS signaling connection. In other words, the AMF can receive and process an N2 message. After the N2 connection between the RAN and the AMF is established, the user served by the AMF enters the CM-CONNECTED state.

FIG. 2 is a diagram of a paging procedure method 200. As shown in FIG. 2, the method includes the following plurality of steps. Step S210 to step S233 indicate a notification process of data trigger on a network side, step S240 to step S252 indicate that a user plane is activated or a paging procedure is triggered, and step S253 and step S260 indicate that the UE triggers a service request procedure and downlink data delivery. For a part that is not described in detail, refer to an existing protocol.

S210: A UPF (SPA) receives downlink data.

For example, when the UPF receives downlink data of a PDU session, if the UPF does not store AN tunnel information for the PDU session, the UPF may notify an SMF of data arrival. For example, the UPF buffers the downlink data in step S221 and step S222, or forwards the downlink data to the SMF in step S223.

S221: The UPF sends a data notification (data notification) message to the SMF, and correspondingly, the SMF receives the data notification message from the UPF. The data notification message includes but is not limited to an N4 session ID, information used to identify a QoS flow of a downlink data packet, or a differentiated services code point (differentiated service codepoint, DSCP).

S222: The SMF sends a data notification acknowledgment (data notification Ack) message to the UPF, and correspondingly, the UPF receives the data notification acknowledgment message from the SMF. It should be understood that if the SMF indicates the UPF to forward the downlink data to the SMF, the SMF buffers the data packet.

S223: The UPF sends the downlink data to the SMF.

Based on step S221 and step S222, or step S223, the SMF obtains the downlink data. Further, the SMF may determine, based on the notification of the UPF, or determine by itself whether to send an Namf_Communication_N1N2MessageTransfer message to an AMF. For example, if the SMF has previously been notified by the AMF that the UE is unreachable, or the UE is reachable only for regulatory prioritized services, the SMF does not send the Namf_Communication_N1N2MessageTransfer message to the AMF. If the SMF has not been notified by the AMF, the SMF sends the Namf_Communication _N1N2MessageTransfer message to the AMF.

S231: The SMF sends the Namf_Communication_N1N2MessageTransfer message to the AMF, and correspondingly, the AMF receives the Namf_Communication_N1N2MessageTransfer message from the SMF.

For example, when the UE is reachable, the SMF sends the Namf_Communication_N1N2MessageTransfer message to the AMF. The message includes but is not limited to a PDU session ID, N2 SM information, an ARP, a paging policy, a destination address of an N1N2 forwarding failure notification, and the like.

S232: The AMF sends an Namf_Communication_N1N2MessageTransfer response message to the SMF, and correspondingly, the AMF receives the Namf_Communication_N1N2MessageTransfer response message from the SMF.

The following specifically describes a definition of the Namf_Communication_N1N2MessageTransfer response message in different connection statuses and scenarios of different UEs.
(1) If the UE is in the CM-IDLE state and the AMF can page the UE, the Namf_Communication_N1N2MessageTransfer response message indicates that the AMF is paging the UE.
(2) If the UE is in the CM-CONNECTED state, the Namf_Communication_N1N2MessageTransfer response message indicates that an N1/N2 message has been sent. Further, step S240 is performed.
(3) If the UE is in the CM-IDLE state and the AMF determines that the UE cannot be paged, the Namf_Communication_N1N2MessageTransfer response message indicates that the UE is unreachable.

S233: The SMF sends a failure indication (failure indication) message to the UPF, and correspondingly, the UPF receives the failure indication message from the SMF.

For example, if the AMF notifies the SMF that the UE is unreachable, or the UE is reachable only for regulatory prioritized services, the SMF sends the failure indication message to the UMF, where the message indicates at least one of the following:
(1) indicating the UPF to stop sending the data notification message to the SMF;
(2) indicating the UPF to stop buffering downlink data and discard the buffered downlink data;
(3) indicating the UPF to stop sending the data notification, stop buffering downlink data, and discard the buffered data; and
(4) when the UE is unreachable, the SMF no longer sends the Namf_Communication_N1N2MessageTransfer message for the downlink data to the AMF.

Further, the AMF determines, based on a status of the UE, an action that needs to be performed in a next step, which includes step S240 or step S251.

In an example, if the UE is in the CM-CONNECTED state, that is, if paging does not need to be performed, the following step S240, that is, a step of activating a user plane connection for the PDU session, is performed.

S240: The AMF, a RAN, and the UE interact with each other to complete activation of the user plane connection for the PDU session.

For example, the AMF sends an N2 request message to the RAN, where the N2 request message carries the N2 SM information in step S231. The RAN reconfigures an air interface connection between the RAN and the UE based on the N2 request message. The RAN returns an N2 ACK message to the AMF, where the message carries the N2 SM info on the RAN side.

In another example, if the UE is in the CM-IDLE state, that is, if paging needs to be performed, the following step S251 is performed.

S251: The AMF, the RAN, and the UE interact with each other to perform a paging procedure.

For example, the AMF sends a paging message to the (R)AN, and the (R)AN pages the UE in an area where the UE is registered (paging area (registration area, RA) for short).

S252: The AMF sends an Namf_Communication_N1N2TransferFailureNotification message to the SMF, and correspondingly, the SMF receives the Namf_Communication_N1N2TransferFailureNotification message from the AMF.

For example, if there is no paging response after the AMF delivers the paging, that is, after step S251 is performed, the AMF returns the Namf_Communication_N1N2TransferFailureNotification message to the SMF, to notify the SMF that the paging fails.

S253: Perform a service request (service request) procedure.

For example, after step S251 is performed, if the UE receives a paging request, and there is a paging response, the UE initiates the service request procedure. A specific implementation is similar to a service request procedure (SR procedure for short) triggered by the UE. For example, the service request procedure includes: The UE sends a NAS message to the AMF through the RAN, where the NAS message carries a service request message. The AMF sends an N2 request message to the RAN, where the N2 request message carries the N2 SM information in step S231. The RAN reconfigures an air interface connection between the RAN and the UE based on the N2 request message. The RAN returns an N2 ACK message to the AMF, where the message carries the N2 SM info on the RAN side.

S260: The UPF sends the downlink data to the UE, and correspondingly, the UE receives the downlink data from the UPF.

Based on the foregoing, when downlink data or signaling arrives at an NF (for example, an SMF/a short message service network element (short message service function, SMSF)/a PCF/a UPF), the NF needs to notify the AMF that the downlink data or the signaling arrives, so that the AMF determines to page the UE (that is, when the UE is in the idle state) or activate the user plane connection (that is, when the UE is in the CM-CONNECTED state). In short, when the downlink data or the signaling arrives at the NF, the AMF performs connection management on the UE.

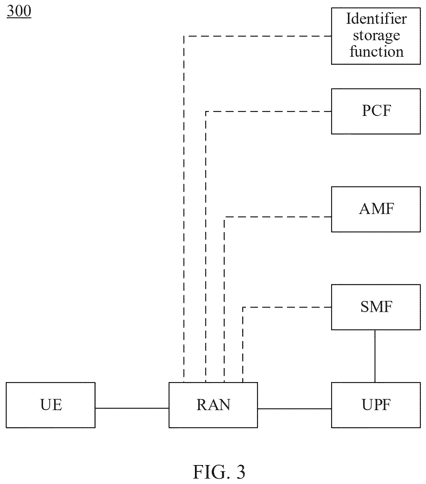

FIG. 3 is a diagram of a RAN service-based network architecture 300 applicable to an embodiment of this application. As shown in FIG. 3, there are interfaces between a RAN and a plurality of NFs (for example, an SMF, an AMF, a PCF, and some or all NFs in an identifier storage function). The interfaces are in a service-based form, and the RAN may directly communicate with the NFs through the interfaces. An interface between the RAN and each NF uses a unified transport layer protocol, for example, a hyper text transfer protocol (hyper text transfer protocol, HTTP)/2, an HTTP/3.0, a fast user datagram protocol (user datagram protocol, UDP), an internet connection (quick UDP internet connection, QUIC), or a stream control transmission protocol (stream control transmission protocol, SCTP).

In this embodiment of this application, the identifier storage function is used to store related information of the UE, for example, the identifier storage function is used to store a correspondence between an identifier of the UE and connection information of the UE, is used to store a correspondence between the identifier of the UE and a registration management function network element, or is used to store a correspondence between the identifier of the UE and information about a network function network element that triggers paging on the UE. For details, refer to the following descriptions. It may be understood that the identifier storage function is a logic function, and may be implemented by another network element function such as a subscription data management network element. Without loss of generality, in this embodiment of this application, an example in which the identifier storage function is replaced with a central network element is used for description. Optionally, the identifier storage function may alternatively be replaced with a UDM, a UDR, or another network element having a storage function. This is not limited in this application. For function descriptions of another network element or device in the network architecture 300, refer to the related descriptions of the network architecture 100 shown in FIG. 1. For brevity, details are not described herein again.

In the RAN service-based architecture, there are direct interfaces between the RAN and core network elements of different types, which can provide unified service discovery and service invoking, reduce function coupling between network elements, reduce a quantity of signaling transmission hops, and implement fast establishment or resumption of a data transmission connection. In this architecture, an existing solution in which the AMF performs connection management on the UE is used, large signaling overheads may be caused, long time is consumed, data transmission connection efficiency is reduced, and further data transmission efficiency and system communication performance are affected. Therefore, in the RAN service-based architecture, how to implement connection management on the UE is a technical problem that needs to be resolved. For example, in the RAN service-based architecture, there is an interface between the RAN and an NF (for example, an SMF/an SMSF/a PCF/a UPF). When downlink data or signaling arrives at the NF, how does the NF trigger resumption of a data transmission connection of the UE.

In view of this, this application provides a connection management method and apparatus. When a data transmission connection of a communication apparatus is disconnected and downlink data of the communication apparatus has not arrived, a first network element sends a request message to a second network element, to request connection information of the communication apparatus. In this way, when the downlink data of the communication apparatus arrives, resumption of the data transmission connection of the communication apparatus is triggered through one or more access network devices, to implement connection management on the communication apparatus by a network side in the RAN service-based architecture.

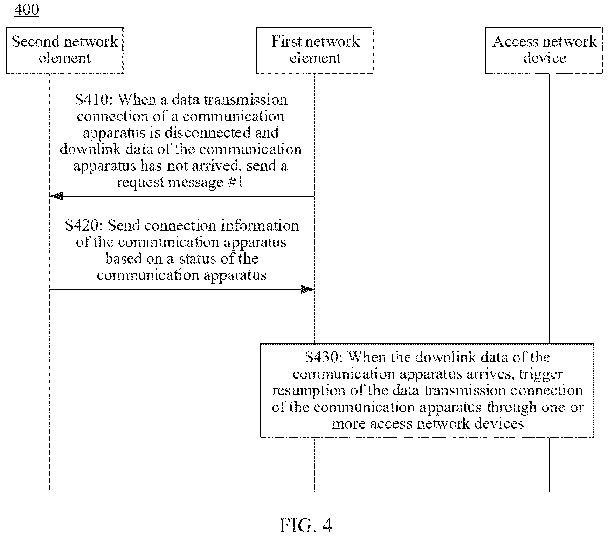

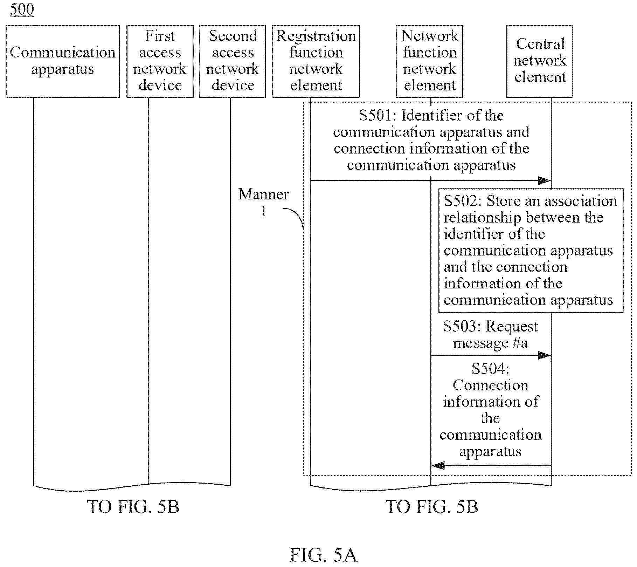

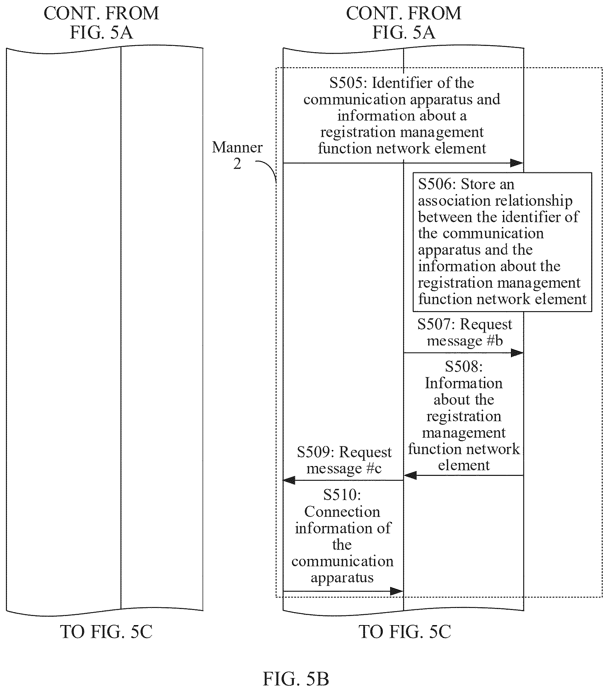

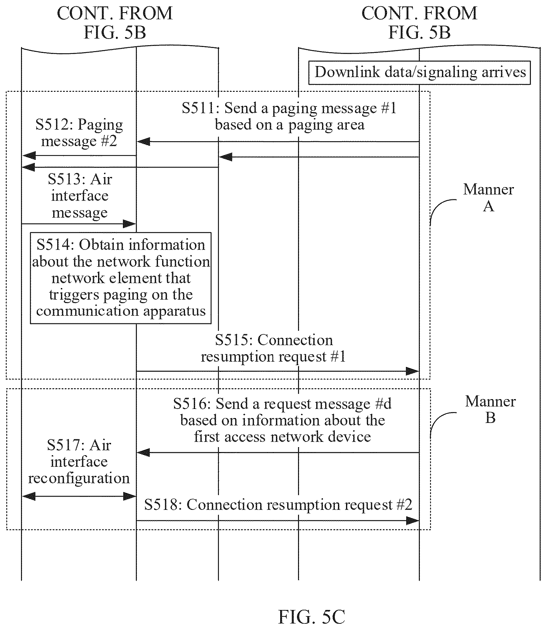

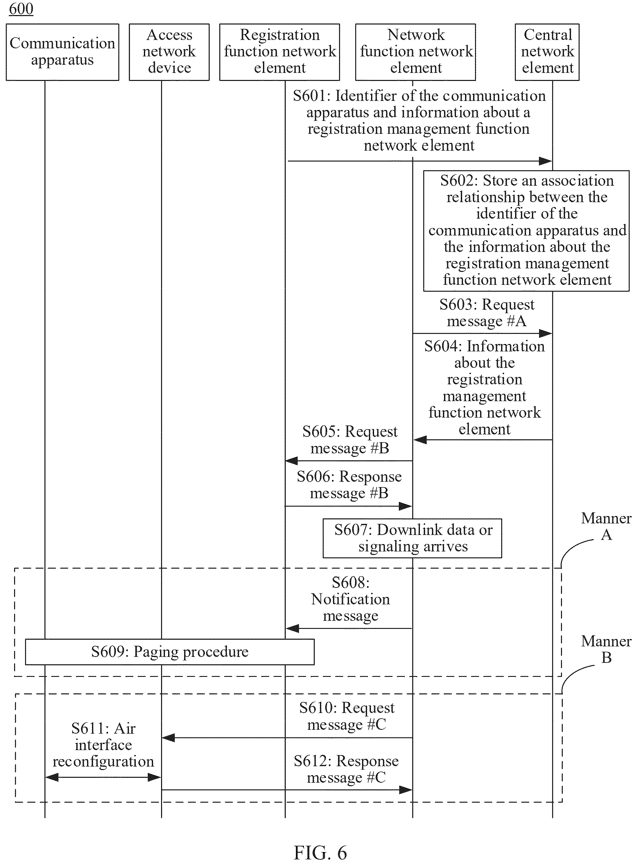

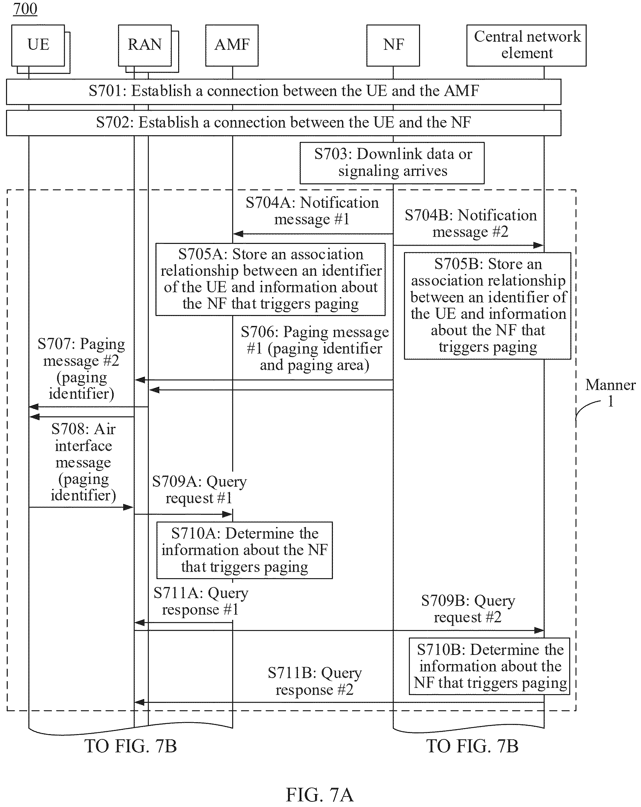

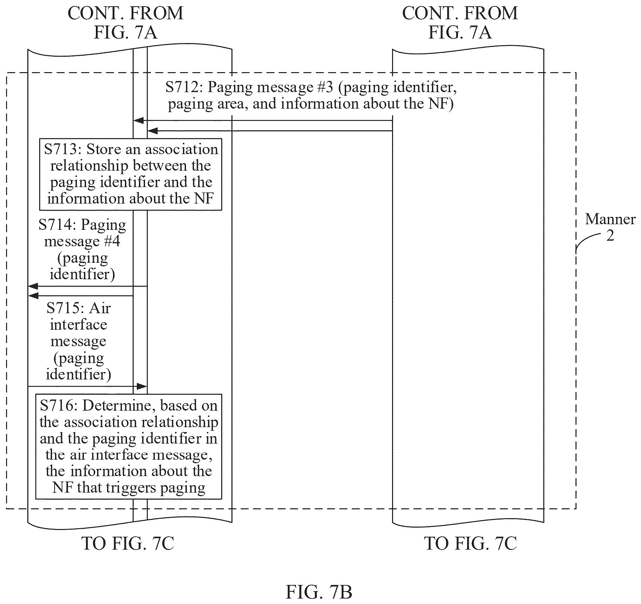

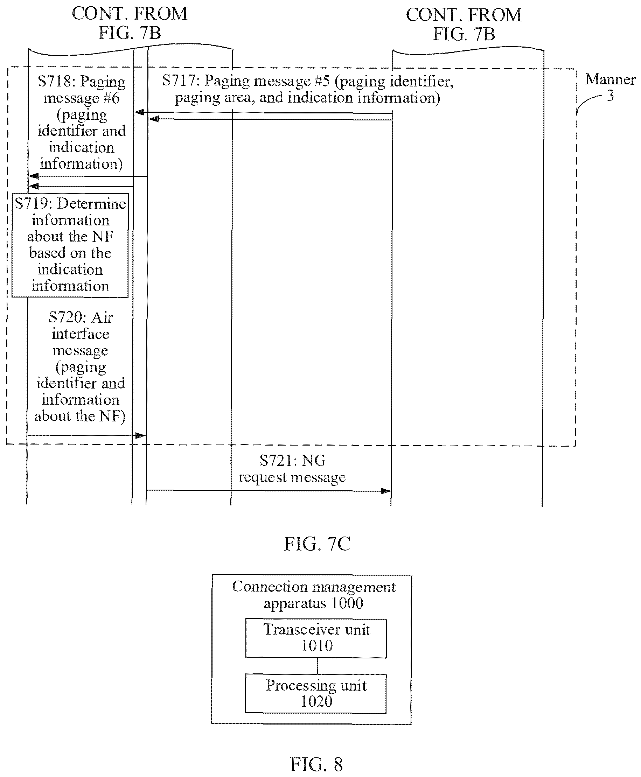

The connection management method provided in embodiments of this application is described in detail with reference to the accompanying drawings. Embodiments provided in this application are applicable to any communication scenario in which a transmit-end device communicates with a receive-end device, for example, may be applied to the communication system shown in FIG. 3. To implement connection management on the communication apparatus by the first network element in the RAN service-based architecture, this application proposes the following methods shown in FIG. 4 to FIG. 7A to FIG. 7C. It should be understood that the method embodiments shown in FIG. 4 to FIG. 7A to FIG. 7C may be combined with each other, and steps in the method embodiments shown in FIG. 4 to FIG. 7A to FIG. 7C may be referenced with each other. For example, in embodiments of this application, the method embodiments shown in FIG. 5A to FIG. 5C to FIG. 7A to FIG. 7C may be considered as possible implementations of implementing functions of the method embodiment shown in FIG. 4. FIG. 5A to FIG. 5C and FIG. 6 mainly describe a case in which the first network element triggers paging on the communication apparatus or triggers resumption of a connection of the communication apparatus through the one or more access network devices. FIG. 7A to FIG. 7C mainly describe how an access network device that serves the communication apparatus determines information about the first network element that triggers paging on the communication apparatus.

FIG. 4 is a schematic flowchart of a communication method 400 according to an embodiment of this application. As shown in FIG. 4, the method procedure may be performed by a first network element (for example, an SMF/an SMSF/a PCF/a UPF), a second network element (for example, an AMF or a central network element), and an access network device (for example, an access network device #1), or may be performed by modules and/or components (for example, chips or integrated circuits) that have corresponding functions and that are installed in the first network element, the second network element, and the access network device. This is not limited in this application. For ease of description, the following uses the first network element, the second network element, and the access network device as execution bodies for description. The method includes the following plurality of steps. For a part that is not described in detail, refer to an existing protocol or the related descriptions in FIG. 3.

S410: When a data transmission connection of a communication apparatus is disconnected and downlink data of the communication apparatus has not arrived, the first network element sends a request message #1 to the second network element, and correspondingly, the second network element receives the request message #1 from the first network element.

For example, the communication apparatus may be a terminal device, for example, the UE shown in FIG. 3. The first network element may be the SMF shown in FIG. 3, and the second network element may be the AMF or the identifier storage function shown in FIG. 3 (in the following embodiments, an example in which the identifier storage function is a central network element is used for description).

Optionally, when the data transmission connection of the communication apparatus is disconnected, the first network element may also send a first request message to the second network element. In other words, whether the downlink data of the communication apparatus arrives at a network side before the first network element sends the first request message to the second network element is not particularly limited in this application, or whether the downlink data arrives at the network side is optional. Before the downlink data of the communication apparatus arrives at the network side, the first network element sends the first request message to the second network element, so that a transmission delay of the downlink data can be further reduced.

The request message #1 is used to request connection information of the communication apparatus, the connection information is used to obtain information about one or more access network devices, and the one or more access network devices include an access network device that serves the communication apparatus. Optionally, the request message #1 includes an identifier of the communication apparatus, for example, an ID of the communication apparatus or address information of the communication apparatus.

It should be understood that when there is only one access network device, it indicates that the access network device is the access network device that provides a service for the communication apparatus. When there are a plurality of access network devices, it indicates that all the plurality of access network devices are located in a paging area of the communication apparatus, and only the access network device that serves the communication apparatus can successfully page the communication apparatus. For example, there are three access network devices in the paging area: a RAN #1, a RAN #2, and a RAN #3, where the RAN #1 serves the communication apparatus. In this case, when the first network element sends a paging message to the communication apparatus through the three access network devices, only the RAN #1 can page the communication apparatus, that is, the communication apparatus may respond to the paging from the RAN #1.

In this embodiment of this application, the downlink data includes user plane data or control plane signaling. That the data transmission connection of the communication apparatus is disconnected may be understood as that a connection between the first network element and the access network device that serves the communication apparatus is disconnected, or a connection between the communication apparatus and the first network element is disconnected, including that an air interface connection between the communication apparatus and the access network device that serves the communication apparatus is disconnected.

In an example, the first network element is configured to manage the data transmission connection of the communication apparatus. For example, if the first network element is the SMF, the data transmission connection of the communication apparatus may be a connection that is between a user plane network element and the communication apparatus and that is used for transmission of user plane data.

In another example, the first network element is configured to send downlink data to the communication apparatus through the data transmission connection of the communication apparatus. For example, if the first network element is the SMF, the SMF may send signaling to the communication apparatus through the data transmission connection.

Optionally, the request message #1 is further used to request to subscribe to the connection information of the communication apparatus, so that when the connection information of the communication apparatus is updated, the second network element sends updated connection information of the communication apparatus to the first network element. In other words, when determining that the connection information of the communication apparatus changes, the second network element may send the updated connection information of the communication apparatus to the first network element in time. Further, when the data transmission connection of the communication apparatus is resumed, the first network element may cancel the subscription from the second network element.

Optionally, the request message #1 is further used to request to subscribe to connection information when the communication apparatus is in an idle state. In other words, when the communication apparatus is in the idle state, the second network element sends the connection information of the communication apparatus to the first network element. Further, when the communication apparatus is in the idle state, and the connection information of the communication apparatus is updated, the second network element sends updated connection information of the communication apparatus to the first network element.

Based on the solution, a subscription request message is sent to the second network element, so that the second network element can send the updated connection information of the communication apparatus to the first network element when the connection information of the communication apparatus is updated. In other words, when the second network element determines that the connection information of the communication apparatus changes, further optionally, when the communication apparatus is in the idle state, the second network element may send the updated connection information of the communication apparatus to the first network element in time. Therefore, the first network element may obtain the latest connection information of the communication apparatus, thereby facilitating subsequent effective connection management on the communication apparatus, and improving downlink data transmission efficiency.

Optionally, before step S410, the method 400 further includes: The first network element obtains information about the second network element. The first network element further sends the request message #1 to the second network element based on the information about the second network element in step S410. The second network element is configured to perform connection management on the communication apparatus. For example, the second network element is an AMF, and the information about the second network element is identification information of the AMF, address information of the AMF, or the like.

In an implementation, the first network element sends a request message #3 to a third network element. Correspondingly, the third network element receives the request message #3 from the first network element. The request message #3 is used to request information about a network element that performs connection management on the communication apparatus, that is, the information about the second network element. Optionally, the request message #3 includes the identifier of the communication apparatus. In response to the request message #3, the third network element sends the information about the second network element to the first network element. Correspondingly, the first network element receives the information about the second network element from the third network element.

Optionally, when the data transmission connection of the communication apparatus is disconnected, the first network element sends the request message #3 to the third network element.

For example, the third network element may be a central network element, a UDM, a UDR, or another storage function network element.

Optionally, the request message #3 is further used to request to subscribe to the information about the network element that performs connection management on the communication apparatus, so that the third network element sends updated information about the network element to the first network element when the information about the network element that performs connection management on the communication apparatus is updated. In other words, when determining that the information about the second network element changes, the third network element may send updated information about the second network element to the first network element in time. Further, when the data transmission connection of the communication apparatus is resumed, the first network element may cancel the subscription from the third network element.

Optionally, the request message #3 is further used to request to subscribe to the information about the network element that performs connection management on the communication apparatus, that is, the information about the second network element, when the data transmission connection of the communication apparatus is disconnected. In other words, when the data transmission connection of the communication apparatus is disconnected, the third network element sends the information about the second network element to the first network element. Further, when the data transmission connection of the communication apparatus is disconnected, and the information about the network element that performs connection management on the communication apparatus is updated, the third network element sends, to the first network element, the updated information about the network element that performs connection management on the communication apparatus.

Based on the solution, a subscription request message is sent to the third network element, so that when the information about the network element that performs connection management on the communication apparatus is updated, the third network element can send, to the first network element, the updated information about the network element that performs connection management on the communication apparatus. In other words, when determining that the information about the network element that performs connection management on the communication apparatus changes, the third network element sends, to the first network element, the changed information about the network element that performs connection management on the communication apparatus. Further, optionally, when the data transmission connection of the communication apparatus is disconnected, the third network element may send, to the first network element in time, the updated information about the network element that performs connection management on the communication apparatus, so that the first network element can obtain the latest information about the network element that performs connection management on the communication apparatus, and subsequently obtain the connection information of the communication apparatus from the network element that performs connection management on the communication apparatus. Therefore, effective connection management is performed on the communication apparatus, and downlink data transmission efficiency is improved.

Optionally, before the first network element obtains the information about the second network element, the method 400 further includes: The second network element sends the identifier of the communication apparatus and the information about the second network element to the third network element. Correspondingly, the third network element receives the identifier of the communication apparatus and the information about the second network element from the second network element, and locally stores an association relationship between the identifier of the communication apparatus and the information about the second network element. Therefore, when receiving the request message #3 from the first network element, the third network element may determine, based on the association relationship and the identifier of the communication apparatus in the request message #3, the information about the second network element that performs connection management on the communication apparatus, and send the information about the second network element to the first network element.

S420: The second network element sends the connection information of the communication apparatus to the first network element, and correspondingly, the first network element receives the connection information of the communication apparatus from the second network element.

For example, the connection information of the communication apparatus may include a paging area of the communication apparatus, and/or information about one or more access network devices corresponding to the paging area, or information about the access network device that serves the communication apparatus.

### (1) Paging area of the communication apparatus:

For example, the paging area represents an area used to page the communication apparatus, and may be represented by using geographical location information, for example, including a cell identifier or a cell index of the communication apparatus, or another representation form indicating the paging area. Cell identifier information includes at least one of the following information: a cell global identifier (cell global identifier, CGI), a physical cell identifier (physical cell identifier, PCI), a frequency, a cell identifier (cell identifier, cell ID), a non-public network identifier (non-public network identifier, NPN ID), a non-terrestrial network identifier (non-terrestrial network identifier, NTN ID), a tracking area code (tracking area code, TAC), or identifier information (for example, a global network device identifier) of a network device to which a cell belongs.

### (2) Information about the one or more access network devices:

For example, the information about the one or more access network devices may be identification information or address information corresponding to the one or more access network devices, or another representation form indicating the one or more access network devices.

### (3) Information about the access network device that serves the communication apparatus:

For example, the access network device that serves the communication apparatus may also be represented as an access network device that provides a service for the communication apparatus. The information about the access network device that serves the communication apparatus may be identification information (for example, a RAN ID) or address information of the access network device that serves the communication apparatus, or another representation form indicating the access network device that serves the communication apparatus.

Optionally, the connection information of the communication apparatus may further include a paging identifier, used to identify the communication apparatus. For example, the paging identifier may be a system architecture evolution temporary mobile subscriber identity (system architecture evolution temporary mobile subscriber identity, SAE-TMSI/S-TMSI) allocated by the AMF, or may be a TMSI allocated by the AMF. This is not limited in this application. The S-TMSI includes information about the AMF, for example, an AMF set ID. The TMSI does not include the information about the AMF. It may be understood that the S-TMSI includes the information about the AMF and the TMSI.

In an implementation, the second network element first determines whether a connection status of the communication apparatus is an idle state or a connected state, and determines, based on the connection status of the communication apparatus, to send corresponding connection information of the communication apparatus to the first network element.

In a first example, when the communication apparatus is in the idle state, the second network element sends the paging area of the communication apparatus to the first network element, where the one or more access network devices are located in the paging area. In this implementation, the first network element may determine, based on the paging area, the one or more access network devices located in the paging area, to trigger the one or more access network devices to page the communication apparatus.

In a second example, when the communication apparatus is in the idle state, the second network element sends the information about the one or more access network devices to the first network element, where the one or more access network devices are used to page the communication apparatus.

Based on the two examples, the paging area of the communication apparatus corresponds to the one or more access network devices, that is, the one or more access network devices are located in the paging area. The information about the one or more access network devices may be carried in the connection information of the communication apparatus sent by the second network element. For example, in the second example, the second network element may send the information about the one or more access network devices to the first network element. Correspondingly, the first network element receives the information about the one or more access network devices from the second network element, where the one or more access network devices are located in the paging area of the communication apparatus. Alternatively, the information about the one or more access network devices may be determined by the first network element based on the connection information of the communication apparatus. For example, in the first example, the connection information of the communication apparatus includes the paging area of the communication apparatus, that is, the second network element may send the paging area of the communication apparatus to the first network element. Correspondingly, the first network element receives the paging area of the communication apparatus from the second network element. Further, the first network element may independently determine, based on the paging area of the communication apparatus, the information about the one or more access network devices corresponding to the paging area.

In a third example, when the communication apparatus is in the connected state, the second network element sends, to the first network element, the information about the access network device that serves the communication apparatus.

In a fourth example, when the communication apparatus is in the idle state, the second network element does not send the connection information of the communication apparatus to the first network element, or the connection information of the communication apparatus sent by the second network element to the first network element is empty.

When the communication apparatus is in the idle state, and the connection information of the communication apparatus is not sent to the first network element, the method 400 further includes: The first network element sends, to the second network element (for example, the AMF), a message used to notify that data of the communication apparatus arrives. Correspondingly, the second network element receives, from the first network element, the message used to notify that the data of the communication apparatus arrives. Further, the second network element sends, to the one or more access network devices based on the message, a message used to page the communication apparatus, where the one or more access network devices are located in the paging area of the communication apparatus.

Optionally, for a case in which the second network element does not send the connection information of the communication apparatus to the first network element when determining that the communication apparatus is in the idle state, that is, the first network element does not obtain the connection information of the communication apparatus from the second network element, the first network element may send a message to the second network element, to indicate the second network element to replace the first network element to trigger a procedure of paging the communication apparatus.

It should be understood that the provided possible implementation examples are merely provided for ease of understanding. In the first three examples, the first network element triggers, based on the obtained connection information of the communication apparatus, the one or more access network devices to perform a paging procedure on the communication apparatus. The fourth example may be understood as that the second network element replaces the first network element to trigger paging on the communication apparatus, that is, the second network element does not send the connection information of the communication apparatus to the first network element when the communication apparatus is in the idle state, and when further receiving, from the first network element, a message used to notify that downlink data or signaling arrives, the second network element autonomously triggers the access network device that serves the communication apparatus to perform a paging procedure on the communication apparatus.

For example, the first network element is an SMF, and the second network element is an AMF or a central network element. In this case, the AMF or the central network element sends the connection information of the communication apparatus to the SMF based on the request message #1 received in step S410 and determining logic of the second network element provided in the foregoing implementations.

It should be noted that, when the second network element is the central network element, before the central network element sends the connection information of the communication apparatus to the SMF, the AMF may send the connection information of the communication apparatus and the identifier of the communication apparatus to the central network element. Correspondingly, the central network element receives the connection information of the communication apparatus and the identifier of the communication apparatus from the AMF, and locally stores an association relationship between the connection information of the communication apparatus and the identifier of the communication apparatus. Therefore, after receiving the request message #1, the central network element may determine the connection information of the communication apparatus based on the locally stored association relationship and the identifier of the communication apparatus in the request message #1, and perform step S420.

Optionally, the AMF may send the connection information of the communication apparatus and the identifier of the communication apparatus to the central network element by using a registration message or a registration update message.

S430: When the downlink data of the communication apparatus arrives, the first network element triggers resumption of the data transmission connection of the communication apparatus through the one or more access network devices.

A specific implementation in which the first network element triggers resumption of the data transmission connection of the communication apparatus through the one or more access network devices is described below based on the connection information of the communication apparatus corresponding to the communication apparatus in the idle state or the connected state.

In a first implementation, if the communication apparatus is in the idle state, and the connection information of the communication apparatus is the paging area of the communication apparatus or the one or more access network devices, the first network element may send a paging message to one or more access network devices in the paging area, or the first network element may directly send the paging message to the one or more access network devices, that is, trigger a paging procedure of the communication apparatus through the one or more access network devices.

For example, the first network element sends, to the one or more access network devices, a message used to page the communication apparatus. Correspondingly, the one or more access network devices receive, from the first network element, the message used to page the communication apparatus. Optionally, the message includes the paging identifier, the paging area, information about the first network element, or the like. Further, the one or more access network devices page the communication apparatus. The access network device that serves the communication apparatus pages the communication apparatus, and receives an air interface message from the communication apparatus. Then, the access network device that serves the communication apparatus sends a request message #2 to the first network element. Correspondingly, the first network element receives the request message #2 from the access network device that serves the communication apparatus, where the request message #2 is used to request to resume the data transmission connection of the communication apparatus. The air interface message is used to request to resume a connection between a network function network element and the communication apparatus, or is used to trigger resumption of the connection between the network function network element and the communication apparatus.

Optionally, the request message #2 includes one or more of the following: an identifier of the access network device that serves the communication apparatus, the paging identifier, the identifier of the communication apparatus, or the like.

For a specific implementation in which the access network device that serves the communication apparatus determines the information about the first network element and requests to resume the data transmission connection of the communication apparatus, refer to the related descriptions of the following step S440 and step S450. Details are not described herein.

In a second implementation, if the communication apparatus is in the connected state, and the connection information of the communication apparatus is the information about the access network device that serves the communication apparatus, the first network element may trigger resumption of the data transmission connection of the communication apparatus through the access network device that serves the communication apparatus.

For example, the first network element sends, to the access network device that serves the communication apparatus, a message used to request to resume the data transmission connection of the communication apparatus. Correspondingly, the access network device that serves the communication apparatus receives, from the first network element, the message used to request to resume the data transmission connection of the communication apparatus. Further, the access network that serves the communication apparatus triggers air interface reconfiguration, to resume the data transmission connection of the communication apparatus. Optionally, the message includes the information about the first network element. For example, the first network element is an SMF. In this case, the information about the first network element may be N2 SM info, including an identifier of the SMF, address information of the SMF, or the like.

Optionally, based on the two implementations, before the first network element triggers the paging procedure of the communication apparatus through the one or more access network devices, or before the first network element triggers resumption of the data transmission connection of the communication apparatus through the access network device that serves the communication apparatus, the method 400 further includes: The first network element determines whether the communication apparatus is located in an allowed area (allowed area) or a non-allowed area (non-allowed area). Optionally, when the communication apparatus is located in the allowed area, the first network element triggers a subsequent paging procedure or a data transmission connection resumption procedure of the communication apparatus. When the communication apparatus is located in the non-allowed area, or when the communication apparatus is not located in the allowed area, the first network element does not trigger the subsequent paging procedure or the data transmission connection resumption procedure of the communication apparatus. The communication apparatus located in the allowed area may communicate with the network side, and the communication apparatus located in the non-allowed area cannot communicate with the network side.

For example, the first network element sends a query message #1 to the third network element. Correspondingly, the third network element receives the query message #1 from the first network element, where the query message #1 is used to query whether the communication apparatus is located in the allowed area (allowed area) or whether the communication apparatus is located in the non-allowed area. In response to the query message #1, the third network element sends a query response message #1 to the first network element. Correspondingly, the first network element receives the query response message #1 from the third network element, where the query response message #1 is used to notify whether the communication apparatus is located in the allowed area or located in the non-allowed area. It should be understood that, if the communication apparatus is located in the allowed area, the first network element triggers the subsequent paging procedure or the data transmission connection resumption procedure of the communication apparatus. If the communication apparatus is located in the non-allowed area, the first network element does not trigger the paging procedure or the data transmission connection resumption procedure of the communication apparatus. For example, it is assumed that the first network element is an SMF, and the communication apparatus is a UE. When downlink data arrives at a UPF side, that is, when the UPF needs to send the downlink data to the UE, the UPF first notifies the SMF that the downlink data arrives, and then the SMF triggers execution of the foregoing procedure of querying whether the UE is located in the allowed area or the non-allowed area. When determining that the UE is located in the non-allowed area, the SMF may send a notification message to the UPF, to notify the UPF that a data transmission connection of the UE cannot be resumed, that is, the UPF cannot transmit the downlink data to the UE.

Optionally, before the first network element sends the query message #1 to the third network element, the method 400 further includes: The second network element sends, to the third network element, information indicating whether the communication apparatus is located in the allowed area or the non-allowed area. Correspondingly, the third network element receives, from the second network element, the information indicating whether the communication apparatus is located in the allowed area or the non-allowed area, and locally stores the indication information. Therefore, when receiving the query message #1 from the first network element, the third network element may determine, based on the indication information, that the communication apparatus is located in the allowed area or the non-allowed area.

A specific implementation in which the first network element triggers resumption of the data transmission connection of the communication apparatus through the access network device in step S430 is described below with reference to the following step S440 and step S450 (not shown in the figure). For example, the access network device that serves the communication apparatus obtains the information about the first network element that triggers paging on the communication apparatus, and sends the request message #2 to the first network element, to request to resume the data transmission connection of the communication apparatus.

Optionally, the access network device that serves the communication apparatus may alternatively request, through an AMF network element, the first network element to resume the data transmission connection of the communication apparatus. For example, the access network device that serves the communication apparatus may send a message #1 to the AMF, to notify the AMF that the data transmission connection of the communication apparatus is resumed. For example, the communication apparatus sends a service request to a RAN, and the RAN sends the message #1 to the AMF. After receiving the message #1, the AMF sends a message #2 to the first network element, to request the first network element to trigger a data transmission connection resumption procedure, where the message #2 may carry the identifier of the access network device that serves the communication apparatus, for example, the RAN ID. In this case, the first network element may establish, based on the message #2, a connection to the access network device that serves the communication apparatus, to provide a service for the communication apparatus through the access network device. In other words, after receiving the message #1, the AMF may determine the access network device that serves the communication apparatus, and then the AMF notifies the first network element of the access network device that serves the communication apparatus. The first network element initiates a connection resumption procedure to the access network device based on the received information about the access network device that serves the communication apparatus, for example, the RAN ID.

S440: An access network device (namely, the access network device that serves the communication apparatus) obtains the information about the first network element.

It should be understood that the first network element is a network element that triggers paging on the communication apparatus, and the information about the first network element is used by the access network device to determine that the network element that triggers paging on the communication apparatus is the first network element.

For example, the information about the first network element may be identification information, address information, or the like of the first network element.

A specific implementation in which the access network device obtains the information about the first network element is described below.

### Manner 1:

For example, the access network device sends a query message to the second network element. Correspondingly, the second network element receives the query message from the access network device, where the query message is used to query information about a network element that triggers paging on the communication apparatus. The query message includes an identifier of the communication apparatus, for example, a UE ID, or a paging identifier of the UE, where the paging identifier of the UE is used to identify the UE. In response to the query message, the second network element sends the information about the first network element to the access network device based on the identifier of the communication apparatus in the query message and a stored association relationship between the identifier of the communication apparatus and the information about the first network element. Correspondingly, the access network device receives the information about the first network element from the second network element.

Optionally, before the access network device sends the query message to the second network element, the method 400 further includes: The first network element sends the information about the first network element and the identifier of the communication apparatus to the second network element. Correspondingly, the second network element receives the information about the first network element from the first network element, and stores the association relationship between the information about the first network element and the identifier of the communication apparatus.

### Manner 2:

For example, the communication apparatus sends a request message #4 to the access network device. Correspondingly, the access network device receives the request message #4 (namely, an air interface message) from the communication apparatus. The request message #4 includes a paging identifier. The request message #4 is used to request to resume the data transmission connection of the communication apparatus, is used to request to resume a connection between a network function network element and the communication apparatus, or is used to trigger resumption of the connection between the network function network element and the communication apparatus. Further, the access network device determines the information about the first network element based on a locally stored association relationship between the paging identifier and the information about the first network element and the paging identifier in the request message #4.

Optionally, before the access network device obtains the information about the first network element, the method 400 further includes: The first network element sends, to the access network device, a message used to trigger paging on the communication apparatus. Correspondingly, the access network device receives, from the first network element, the message used to trigger paging on the communication apparatus. The message includes a paging identifier of the communication apparatus and the information about the first network element. Further, the access network device stores an association relationship between the paging identifier and the information about the first network element.

Optionally, the information about the first network element and the paging identifier of the communication apparatus may be separately sent. For example, the information about the first network element may not be carried in the message used to trigger paging on the communication apparatus. This is not limited in this application.

### Manner 3:

For example, the communication apparatus sends a request message #5 to the access network device. Correspondingly, the access network device receives the request message #5 from the communication apparatus, where the request message #5 includes the information about the first network element, and the request message #5 is used to request to resume the data transmission connection of the communication apparatus. In this case, the access network device may obtain the information about the first network element based on the request message #5. In other words, in this implementation, the access network device may obtain the information about the first network element from the communication apparatus. For example, in a procedure in which a network function network element triggers paging on the communication apparatus, the network function network element sends a paging message #a to one or more access network devices. The paging message #a includes a paging identifier, a paging area, and indication information. The indication information indicates that a network element that triggers paging on the communication apparatus is the network function network element. For example, the indication information may include information about the network function network element, for example, an identifier of the network function network element. Further, the one or more access network devices send a paging message #b to the communication apparatus. The paging message #b includes the paging identifier and the indication information. Further, the communication apparatus may determine the information about the network function network element based on the indication information, and include the information about the network function network element in a service request sent to the access network device that serves the communication apparatus, so that the access network device that serves the communication apparatus obtains the information about the network function network element.

It should be understood that the foregoing provided implementations of obtaining the information about the first network element are merely examples provided for ease of understanding, and should not constitute any limitation on the technical solutions of this application.

S440: The access network device sends the request message #2 to the first network element, and correspondingly, the first network element receives the request message #2 from the access network device.

The request message #2 is used to request to resume the data transmission connection of the communication apparatus. Optionally, the request message #2 includes one or more of the following: information about the access network device, a paging identifier, a session connection resumption request indication, or the like. For example, when the access network device is a RAN, and the first network element is an SMF, the RAN sends the request message #2 to the SMF, where the request message #2 carries N2 SM info on the RAN side.

In the solution provided in this application, the first network element obtains the connection information of the communication apparatus from the second network element (for example, an AMF or a central network element). A RAN service-based architecture scenario is provided, that is, there is an interface between the first network element and the access network device that serves the communication apparatus, and the first network element may directly perform connection management on the communication apparatus through the access network device. In other words, when the data transmission connection of the communication apparatus is disconnected and the downlink data of the communication apparatus has not arrived, the first network element obtains the connection information of the communication apparatus from the second network element. In addition, when the downlink data or signaling arrives at the first network element, the first network element may directly trigger, through the access network device that serves the communication apparatus, resumption of the data transmission connection of the communication apparatus. This can reduce a signaling transmission delay, reduce function coupling between network elements, reduce a quantity of signaling transmission hops, provide unified service discovery and service invoking, and implement fast establishment of the data transmission connection.

FIG. 5A to FIG. 5C are a schematic flowchart of a communication method 500 according to an embodiment of this application. As shown in FIG. 5A to FIG. 5C, an example in which a first network element is a network function network element (for example, an SMF), a second network element is a registration function network element or a central network element, and a third network element is a central network element is used. In this implementation, the first network element mainly obtains connection information of a communication apparatus, and triggers resumption of a data transmission connection of the communication apparatus through one or more access network devices. The method includes the following plurality of steps. For a part that is not described in detail, refer to an existing protocol. Optionally, the registration function network element in this implementation may be an access and mobility management network element AMF network element. This is not limited in this application. It should be understood that the related descriptions in the embodiment shown in FIG. 4 are also applicable to this implementation. A same or similar technical means may exist between FIG. 4 and FIG. 5A to FIG. 5C. Content in FIG. 5A to FIG. 5C that has been described in the embodiment in FIG. 4 is not described again.

A specific implement in which the network function network element obtains the connection information of the communication apparatus is described below in Manner 1 and Manner 2. Step S501 to step S504 in Manner 1 is that the network function network element obtains the connection information of the communication apparatus from the central network element, and step S505 to step S510 in Manner 2 is that the network function network element obtains the connection information of the communication apparatus from the registration function network element.

### Manner 1:

S501: The registration function network element sends an identifier of the communication apparatus and the connection information of the communication apparatus to the central network element, and correspondingly, the central network element receives the identifier of the communication apparatus and the connection information of the communication apparatus from the registration function network element.

For example, the registration function network element sends a registration message or a registration update message to the central network element. Correspondingly, the central network element receives the registration message or the registration update message from the registration function network element. The registration message or the registration update message includes the identifier of the communication apparatus and the connection information of the communication apparatus. For a specific parameter meaning, refer to the related descriptions of the method 400. Details are not described herein again.

Optionally, information about the registration management function network element may be an identifier of the registration management function network element, an address of the registration management function network element, or another representation form indicating the registration management function network element.

S502: The central network element stores an association relationship between the identifier of the communication apparatus and the connection information of the communication apparatus.

S503: The network function network element sends a request message #a to the central network element, and correspondingly, the central network element receives the request message #a from the network function network element. The request message #a may include the identifier of the communication apparatus. The request message #a is used to request to obtain the connection information of the communication apparatus, or the request message #a is used to request to obtain status information of the communication apparatus.

Optionally, the request message #a may be a subscription request message #a.

It may be understood that the network function network element may trigger the subscription request message #a when a connection between the communication apparatus and the network function network element does not exist (or when a connection between an access network device that serves the communication apparatus and the network function network element does not exist). In this case, the subscription is canceled when the connection between the communication apparatus and the network function network element exists/is resumed (or when the connection between the access network device that serves the communication apparatus and the network function network element exists/is resumed).

S504: The central network element sends the connection information of the communication apparatus to the network function network element, and correspondingly, the network function network element receives the connection information of the communication apparatus from the central network element.

For example, the central network element determines the connection information of the communication apparatus based on the association relationship stored in step S503, the identifier of the communication apparatus in the request message #a, and the status information of the communication apparatus. For example, if the communication apparatus is in an idle state, the returned connection information of the communication apparatus is a paging area and a paging identifier. Optionally, the connection information of the communication apparatus may further include information about one or more access network devices corresponding to the paging area, for example, a RAN list. If the communication apparatus is in a connected state, the returned connection information of the communication apparatus is information about the access network device that serves the communication apparatus, for example, a RAN ID, indicating that the communication apparatus is served by a RAN corresponding to the RAN ID in this case. For content included in the connection information of the communication apparatus and a specific explanation thereof, and determining logic of determining the connection information of the communication apparatus by the central network element, refer to the related descriptions of the method 400. Details are not described herein again.

Optionally, the central network element further sends a connection status of the communication apparatus to the network function network element.

Optionally, if the central network element determines that the connection status of the communication apparatus does not correspond to the locally stored connection information of the communication apparatus, the central network element may not return the connection information of the communication apparatus to the first network element. For example, the central network element determines that the communication apparatus is in an idle state, and the locally stored connection information of the communication apparatus includes the information about the access network device that serves the communication apparatus. Alternatively, the central network element determines that the communication apparatus is in a connected state, and the locally stored connection information of the communication apparatus includes the paging area of the communication apparatus or information about one or more access network devices located in the paging area. In this case, the central network element may not send the connection information of the communication apparatus to the first network element. This may be because the communication apparatus moves, or the access network device that serves the communication apparatus changes. This is not limited in this application.

Optionally, in step S504, the central network element may not determine the status information of the communication apparatus. In other words, the central network element may determine the connection information of the communication apparatus based on the stored association relationship and the identifier of the communication apparatus in the request message #a, and then send the connection information of the communication apparatus to the first network element.

### Manner 2:

S505: The registration function network element sends an identifier of the communication apparatus and information about the registration management function network element to the central network element, and correspondingly, the central network element receives the identifier of the communication apparatus and the information about the registration management function network element from the registration function network element.

For example, the registration function network element sends a registration message or a registration update message to the central network element. Correspondingly, the central network element receives the registration message or the registration update message from the registration function network element. The registration message or the registration update message includes the identifier of the communication apparatus and the information about the registration management function network element. For a specific parameter meaning, refer to the related descriptions of step S501. Details are not described herein again.

S506: The central network element stores an association relationship between the identifier of the communication apparatus and the information about the registration management function network element.

S507: The network function network element sends a request message #b to the central network element, and correspondingly, the central network element receives the request message #b from the network function network element.

The request message #b includes an identifier of the communication apparatus, and the request message #b is used to request to obtain the information about the registration management function network element.

S508: The central network element sends the information about the registration management function network element to the network function network element, and correspondingly, the network function network element receives the information about the registration management function network element from the central network element.

For example, the central network element determines the information about the registration management function network element based on the association relationship stored in step S507 and the identifier of the communication apparatus in the request message #b.

S509: The network function network element sends a request message #c to the registration function network element, and correspondingly, the registration function network element receives the request message #c from the network function network element.

For content included in the request message #c and a specific explanation thereof, refer to the related descriptions of the request message #a in step S503. Details are not described herein again.

S510: The registration function network element sends the connection information of the communication apparatus to the network function network element, and correspondingly, the network function network element receives the connection information of the communication apparatus from an AMF.

For content included in the connection information of the communication apparatus and a specific explanation thereof, and determining logic of determining the connection information of the communication apparatus by the registration function network element, refer to the related descriptions of step S404. Details are not described herein again.

In this embodiment of this application, it may be understood that the foregoing step S501 to step S510 are performed when a data transmission connection of the communication apparatus is disconnected and downlink data or signaling of the communication apparatus has not arrived. Further, when the downlink data or the signaling arrives, the network function network element may trigger, based on the obtained connection information of the communication apparatus, resumption of the data connection of the communication apparatus through one or more access network devices in Manner A and Manner B. In Manner A, when the communication apparatus is in an idle state, the network function network element triggers a paging procedure of the communication apparatus through the one or more access network devices (for example, a first access network device and a second access network device). In Manner B, when the communication apparatus is in a connected state, the network function network element triggers a data connection resumption procedure of the communication apparatus through an access network device (for example, the first access network device) that serves the communication apparatus, that is, paging does not need to be performed. This may be understood as a procedure of activating a user plane connection by using a session.

An example in which the one or more access network devices include the first access network device and the second access network device is used below for description. In this case, both the first access network device and the second access network device are located in a paging area. The first access network device is an access network device that serves the communication apparatus.

### Manner A:

S511: The network function network element sends a paging message #1 to the first access network device and the second access network device based on the paging area, and correspondingly, the first access network device and the second access network device receive the paging message #1 from the network function network element.

It should be understood that the first access network device and the second access network device are located in the paging area.

For example, the paging message #1 includes a paging identifier and a paging area. Optionally, the paging message #1 further includes an identifier of the communication apparatus and/or an identifier of an SMF.

Optionally, when the communication apparatus is in an idle state, the network function network element may obtain the paging area of the communication apparatus or the one or more access network devices in Manner 1 or Manner 2.

S512: The first access network device and the second access network device respectively send paging messages #2, and correspondingly, the communication apparatus receives the paging message #2 from the first access network device.

It may be understood that the first access network device is an access network device that serves the communication apparatus.

For example, the paging message #2 includes a paging identifier. Optionally, the paging message #2 further includes the identifier of the communication apparatus and/or the identifier of the network function network element.

S513: The communication apparatus sends an air interface message to the first access network device, and correspondingly, the first access network device receives the air interface message from the communication apparatus, where the air interface message is used to request to resume a connection between the network function network element and the communication apparatus, or is used to trigger resumption of the connection between the network function network element and the communication apparatus. For example, in response to the paging message #2, the communication apparatus sends the air interface message to the first access network device. The air interface message includes a paging identifier. Optionally, the air interface message further includes a session connection resumption request indication.

S514: The first access network device obtains information about a network function network element that triggers paging on the communication apparatus. For a specific implementation, refer to the following method shown in FIG. 7A to FIG. 7C. Details are not described herein.

S515: The first access network device sends a connection resumption request #1 to the network function network element, and the network function network element receives the connection resumption request #1 from the first access network device.

For example, the connection resumption request #1 may be an Nsmf_initial UE message. The first access network device sends an acknowledgment message, for example, an NG acknowledgment (NG acknowledge, NG ACK) message, to the network function network element, where the acknowledgment message carries the information about the network function network element. For example, when the network function network element is an SMF, the NG ACK message may carry N2 SM info.

### Manner B:

S516: The network function network element sends a request message #d to the first access network device based on information about the first access network device, and correspondingly, the first access network device receives the request message #d from the network function network element.

It may be understood that the first access network device is an access network device that serves the communication apparatus.

For example, the request message #d may be an NG request message, and carries information about the network function network element. For example, when the network function network element is an SMF, an NG ACK message may carry N2 SM info.

Optionally, when the communication apparatus is in a connected state, the network function network element may obtain, in Manner 1 or Manner 2, an access network device that serves the communication apparatus, for example, the first access network device.

S517: The first access network device triggers air interface reconfiguration.

For example, the first access network device reconfigures an air interface connection between the first access network device and the communication apparatus based on the NG request message. For a specific implementation, refer to the related descriptions of the method 300. Details are not described herein again.

S518: The first access network device sends a connection resumption request #2 to the network function network element, and the network function network element receives the connection resumption request #2 from the first access network device.

For example, the first access network device sends an NG ACK message to the network function network element, where the NG ACK message carries the information about the network function network element. For example, when the network function network element is an SMF, the NG ACK message carries N2 SM info on a RAN side.

It should be understood that, in Manner A or Manner B, a connection between the network function network element and the communication apparatus, or a connection between the first access network device that serves the communication apparatus and the network function network element is established or resumed, so that data or signaling can be transmitted between the communication apparatus and a network side.

In the solution provided in this application, the first network element obtains the connection information of the communication apparatus from the second network element (for example, an AMF or a central network element). A RAN service-based architecture scenario is provided, that is, there is an interface between the first network element and the access network device that serves the communication apparatus, and the first network element may directly perform connection management on the communication apparatus through the access network device. In other words, when the data transmission connection of the communication apparatus is disconnected and the downlink data of the communication apparatus has not arrived, the first network element obtains the connection information of the communication apparatus from the second network element. In addition, when the downlink data or signaling arrives at the first network element, the first network element may trigger resumption of the data transmission connection of the communication apparatus through one or more access network devices. Compared with the conventional technology in which the first network element needs to page the communication apparatus through an AMF or activate a user plane connection, to implement connection management on the communication apparatus, the technical solutions of this application can reduce a signaling transmission delay, and reduce a quantity of signaling transmission hops, so that the data transmission connection can be quickly established or resumed.

FIG. 6 is a schematic flowchart of a communication method 600 according to an embodiment of this application. An example in which a first network element is a network function network element (for example, an SMF), a second network element is a registration function network element or a central network element, and a third network element is a central network element is used. A difference between the method shown in FIG. 6 and the method shown in FIG. 5A to FIG. 5C lies in that in this implementation, the registration function network element does not send connection information of a communication apparatus to the first network element when the communication apparatus is in an idle state, and the second network element replaces the first network element to trigger resumption of a data transmission connection of the communication apparatus through an access network device that serves the communication apparatus. The method includes the following plurality of steps. For a part that is not described in detail, refer to an existing protocol. It should be understood that the related descriptions in the embodiment shown in FIG. 4 or FIG. 5A to FIG. 5C are also applicable to this implementation. A same or similar technical means may exist among FIG. 4, FIG. 5A to FIG. 5C, and FIG. 6. Content in FIG. 6 that has been described in the embodiment in FIG. 4 and the embodiment in FIG. 5A to FIG. 5C is not described again.

A specific implementation in which the network function network element obtains the connection information of the communication apparatus is described below with reference to step S601 to step S606. For a specific implementation of step S601 to step S606 when the communication apparatus is in a connected state, and exchanged information and meanings thereof, refer to the related descriptions of step S505 to step S510 in Manner 2 of the method 500. Optionally, for a specific implementation of step S601 to step S606 when the communication apparatus is in the connected state, and exchanged information and meanings thereof, refer to step S501 to step S504 (not shown in the figure) in Manner 1 of the method 500. For brevity, details are not described herein again.

S601: The registration function network element sends an identifier of the communication apparatus and information about the registration management function network element to the central network element, and correspondingly, the central network element receives the identifier of the communication apparatus and the information about the registration management function network element from the registration function network element.

S602: The central network element stores an association relationship between the identifier of the communication apparatus and the information about the registration management function network element.

S603: The network function network element sends a request message #A to the central network element, and correspondingly, the central network element receives the request message #A from the network function network element.

S604: The central network element sends the information about the registration management function network element to the network function network element, and correspondingly, the network function network element receives the information about the registration management function network element from the central network element.

S605: The network function network element sends a request message #B to the registration function network element, and correspondingly, the registration function network element receives the request message #B from the network function network element.

For example, when a data transmission connection of the communication apparatus is disconnected and downlink data of the communication apparatus has not arrived, the network function network element sends the request message #B to the network function network element, where the request message #B is used to request the connection information of the communication apparatus, and the second network element is configured to perform connection management on the communication apparatus.

S606: The registration function network element sends a response message #B to the network function network element, and correspondingly, the network function network element receives the response message #B from the registration function network element. The response message #B includes the connection information of the communication apparatus.

For example, if the communication apparatus is in an idle state, the registration function network element does not return any information, or returns no information. Optionally, if the communication apparatus is in the idle state, the registration function network element may send, to the network function network element, information indicating that the communication apparatus is in the idle state. Correspondingly, when determining that downlink data or signaling arrives, the network function network element may notify the registration function network element, so that the registration function network element triggers a procedure of paging the communication apparatus. If the communication apparatus is in a connected state, the registration function network element returns information about an access network device that serves the communication apparatus, for example, a RAN ID, indicating that in this case, the communication apparatus is served by a RAN corresponding to the RAN ID.

S607: The network function network element determines that the downlink data or the signaling arrives.

It should be understood that step S601 to step S606 are performed when the data transmission connection of the communication apparatus is disconnected and the downlink data or the signaling of the communication apparatus has not arrived. Further, when the downlink data or the signaling arrives, the network function network element may implement connection management on the communication apparatus based on the response message #B in step S606 in the following Manner A and Manner B. In Manner A, when the communication apparatus is in an idle state, the network function network element does not receive the connection information from the registration function network element, and then sends a notification message to the registration function network element, so that the registration function network element triggers a paging procedure of the communication apparatus through one or more access network devices. In Manner B, when the communication apparatus is in a connected state, the network function network element triggers a data connection resumption procedure of the communication apparatus through an access network device that serves the communication apparatus, that is, paging does not need to be performed. This may be understood as a procedure of activating a user plane connection by using a session.

### Manner A:

S608: An NF sends a notification message to the registration function network element, and correspondingly, the registration function network element receives the notification message from the network function network element.

For example, when the downlink data of the communication apparatus arrives and the connection information of the communication apparatus is unavailable, the network function network element sends the notification message to the registration function network element. The notification message is used to notify the registration function network element that the downlink data or the signaling of the communication apparatus arrives, so that the registration function network element triggers resumption of the data transmission connection for paging the communication apparatus.

It should be noted that, that the connection information of the communication apparatus is unavailable may be understood as that the network function network element does not receive the connection information of the communication apparatus from the registration function network element, for example, a paging area of the communication apparatus, or information about one or more access network devices corresponding to the paging area, for example, a RAN list. Optionally, the network function network element may determine, based on a case in which the connection information of the communication apparatus is not received within specific time (for example, within 2h after the request message #B in step S605 is sent), that step S608 needs to be performed.

For example, the notification message herein may be an Namf_Communication_N1N2MessageTransfer message, and the message may include information elements such as a PDU session ID, N2 SM information, an ARP, a paging policy, and a destination address for an N1N2 forwarding failure notification. For example, the notification message may be understood as follows: When receiving the downlink data, a user plane network element sends the notification message to the registration function network element through the network function network element, and the registration function network element may determine, based on the information element in the notification message and a connection status of the communication apparatus, to trigger a paging procedure or a user plane connection procedure.

S609: The registration function network element triggers a paging procedure.

For a specific implementation in which the registration function network element triggers paging on the communication apparatus, refer to the related descriptions of the method 300. For brevity, details are not described herein again.

### Manner B:

S610: The network function network element sends a request message #C to the access network device that serves the communication apparatus, and correspondingly, the access network device receives the request message #C from the network function network element.

For example, the request message #C may be an NG request message, and carries information about the network function network element. For example, when the network function network element is an SMF, an NG ACK message may carry N2 SM info.

S611: The access network device triggers air interface reconfiguration.

For example, the access network device reconfigures an air interface connection between the access network device and the communication apparatus based on the NG request message. For a specific implementation, refer to the related descriptions of the method 300. Details are not described herein again.

S612: The access network device that serves the communication apparatus sends a response message #C to the network function network element, and correspondingly, the network function network element receives the response message #C from the access network device that serves the communication apparatus.

For example, the access network device that serves the communication apparatus sends the NG ACK message to the network function network element, where the NG ACK message carries the information about the network function network element. For example, when the network function network element is the SMF, the NG ACK message carries the N2 SM info.

It should be understood that, in Manner A or Manner B, a connection between the network function network element and the communication apparatus, or a connection between the first access network device that serves the communication apparatus and the network function network element is established or resumed, so that data or signaling can be transmitted between the communication apparatus and a network side.

In the solution provided in this application, when the communication apparatus is in the connected state, the first network element obtains the connection information of the communication apparatus from the second network element, and when the communication apparatus is in the idle state, the second network element does not send the connection information of the communication apparatus to the first network element. A RAN service-based architecture scenario is provided, that is, the second network element triggers, based on a message that is sent by the first network element and that is used to notify that downlink data or signaling arrives, paging on the communication apparatus through the access network device that serves the communication apparatus, to implement connection management on the communication apparatus by the first network element. This can simplify processing logic on a network function network element side, and avoid modifications to an existing standardized system and procedure, and the network function network element as much as possible.

FIG. 7A to FIG. 7C are a schematic flowchart of a communication method 700 according to an embodiment of this application. An example in which a first network element is an NF, a second network element is an AMF or a central network element, a third network element is a central network element, a communication apparatus is a UE, and an access network device that serves the communication apparatus is a RAN #1 is used. This implementation mainly provides more detailed descriptions of step S440 in the method 400 and step S514 in the method 500 that the access network device that serves the communication apparatus obtains the information about the first network element. The method includes the following plurality of steps. For a part that is not described in detail, refer to an existing protocol. It should be understood that the related descriptions in the embodiment shown in FIG. 4 are also applicable to this implementation. A same or similar technical means may exist between FIG. 4 and FIG. 5A to FIG. 5C. Content that has been described in the embodiment in FIG. 4 and the embodiment in FIG. 5A to FIG. 5C is not described again.

S701: Establish a connection between the UE and the AMF.

S702: Establish a connection between the UE and the NF.

For specific implementations of step S701 and step S702, refer to the related descriptions of the foregoing method 400 to method 600, for example, refer to Manner 1 or Manner 2 in the method 500, or refer to step S601 to step S606 in the method 600. For brevity, details are not described herein again.

S703: Downlink data or signaling arrives.

For example, if a network function network element is an SMF, the downlink data arrives at a user plane network element UPF, and the UPF may notify the SMF that the downlink data arrives. For example, the UPF sends a data notification message to the SMF, where the data notification message carries an N4 session ID, information for identifying a QoS flow of a downlink data packet, or the like, so that the SMF performs any one of the following Manner 1 to Manner 3, to implement connection management on the UE.

In this embodiment of this application, it may be understood that step S701 and step S702 are performed when a data transmission connection of the communication apparatus is disconnected and downlink data or signaling of the communication apparatus has not arrived. Further, when the downlink data or the signaling arrives, the NF may trigger, through one or more access network devices, resumption of the data connection of the communication apparatus based on obtained connection information of the communication apparatus. A specific implementation in which the access network device that serves the UE determines information about the NF in a process in which a paging procedure is triggered when the communication apparatus is in an idle state is mainly described below with reference to Manner 1 to Manner 3. In Manner 1, the access network device obtains the information about the first network element by querying the second network element. In Manner 2, the access network device obtains the information about the first network element through a local query. In Manner 3, the access network device obtains the information about the first network element by receiving an air interface message from the communication apparatus. In addition, for an implementation in which the communication apparatus is in the connected state and the NF triggers resumption of the data transmission connection of the communication apparatus, refer to the related descriptions of the foregoing method 400 to method 600. Details are not described herein again.

### Manner 1:

S704A: The NF sends a notification message #1 to the AMF, and correspondingly, the AMF receives the notification message #1 from the NF.

The notification message #1 includes an identifier of the UE, for example, a UE ID or address information of the UE. The UE ID or the address information of the UE is used to identify the UE. Optionally, the UE ID may be represented by using a paging identifier, or the UE may be represented by using a permanent identifier (SUPI).

In addition, the notification message #1 further includes the information about the NF, for example, one or more of an NF ID, a type of the NF, a PDU session ID, a data network name (data network name, DNN), or single network slice selection assistance information (single network slice selection assistance information, S-NSSAI). The type of the NF, for example, an NF type, is a type such as an SMF, a PCF, or an LMF. Optionally, when the NF is the SMF, the information about the NF may be the NF ID, or the PDU session ID/the DNN/the S-NSSAI. When the NF is the PCF or the LMF, the information about the NF may be the type of the NF or the NF ID.

The notification message #1 indicates that a network element that triggers paging on the UE is the NF.

S705A: The AMF stores an association relationship between the identifier of the UE and information about the NF that triggers paging.

S704B: The NF sends a notification message #2 to the central network element, and correspondingly, the central network element receives the notification message #2 from the NF.

For content included in the notification message #2 and a meaning thereof, refer to the related descriptions of the notification message #1 in step S704A.

S705B: The central network element stores an association relationship between the identifier of the UE and information about the NF that triggers paging.

It should be noted that, the NF may perform either step S704A and step S705A or step S704B and step S705B. This is not specifically limited in this application.

S706: The NF sends a paging message #1 to one or more RANs, and correspondingly, the one or more RANs receive the paging message #1 from the NF.

The paging message #1 includes a paging identifier and a paging area.

It should be understood that when the communication apparatus is in an idle state, the connection information of the communication apparatus obtained by the NF in step S702 includes a paging area of the communication apparatus, or information about one or more RANs corresponding to the paging area. The information about the one or more RANs includes an access network device, for example, a RAN #1, that serves the communication apparatus.

S707: The one or more RANs send a paging message #2 to the UE. The paging message #2 carries the paging identifier.

S708: The UE sends an air interface message to the RAN #1 that serves the UE, and correspondingly, the RAN #1 receives the air interface message from the UE. The air interface message includes a paging identifier. Optionally, the air interface message may further include a NAS message, for example, a service request, used to request to resume a connection between the RAN #1 and the NF.

S709A: The RAN #1 sends a query request #1 to the AMF, and correspondingly, the AMF receives the query request #1 from the RAN #1.

S710A: The AMF determines, based on an association relationship and an identifier of the UE in the query request #1, the information about the NF that triggers paging.

S711A: The AMF sends a query response #1 to the RAN #1, and correspondingly, the RAN #1 receives the query response #1 from the AMF.

S709B: The RAN #1 sends a query request #2 to the central network element, and correspondingly, the central network element receives the query request #2 from the RAN #1.

S710B: The central network element determines, based on an association relationship and an identifier of the UE in the query request #2, the information about the NF that triggers paging.

S711B: The central network element sends a query response #2 to the RAN #1, and correspondingly, the RAN #1 receives the query response #2 from the central network element.

It should be noted that step S709A to step S711A indicate that the RAN #1 queries the AMF for the information about the NF that triggers paging on the UE, and step S709B to step S711B indicate that the RAN #1 queries the central network element for the information about the NF that triggers paging on the UE. The RAN may obtain, in any one of the manners, the information about the NF that triggers paging on the UE.

For example, based on step S709A to step S711B, the RAN #1 sends a query request to the AMF or the central network element, to query an NF that triggers downlink paging on the UE, or an NF that triggers resumption of a connection of the UE. The AMF determines, based on the association relationship stored in step S705A, the information about the NF that triggers downlink paging, or the central network element determines, based on the association relationship stored in S705B, the information about the NF that triggers downlink paging, and returns a query response to the RAN #1, that is, includes the information about the NF in the query response. Therefore, the RAN #1 may determine, based on the query response, the information about the NF that triggers downlink paging.

### Manner 2:

S712: The NF sends a paging message #3 to one or more RANs, and correspondingly, the one or more RANs receive the paging message #3 from the NF.

The paging message #3 includes a paging identifier, a paging identifier, and the information about the NF.

S713: The one or more RANs store an association relationship between the paging identifier and the information about the NF.

S714: The one or more RANs send a paging message #4 to the UE. The paging message #4 includes the paging identifier.

S715: The UE sends an air interface message to a RAN #1 that serves the UE, and correspondingly, the RAN #1 receives the air interface message from the UE. The air interface message includes a paging identifier. Optionally, the air interface message may further include a NAS message, for example, a service request, used to request to resume a connection between the RAN #1 and the NF.

S716: The RAN#1 determines, based on the association relationship and the paging identifier in the air interface message, the information about the NF that triggers paging, for example, an NF ID.

Optionally, the RAN #1 may set a timer, for example, 10h, to delete the association relationship that is between the information about the NF and the paging identifier and that is stored in step S716. Alternatively, the RAN #1 may delete the association relationship after the air interface message is sent by the UE once, that is, the association relationship is used only once.

### Manner 3:

S717: The NF sends a paging message #5 to one or more RANs, and correspondingly, the one or more RANs receive the paging message #5 from the NF.

The paging message #5 carries a paging identifier, a paging area, and indication information, the indication information indicates that a network element that triggers paging on the UE is the NF, and the indication information may be information about the NF.

S718: The one or more RANs send a paging message #6 to the UE. The paging message #6 includes the paging identifier and the indication information.

S719: The UE determines the information about the NF based on the indication information.

Further, the UE stores an association relationship between the paging identifier and the information about the NF. The UE determines the information about the NF based on the association information and the paging identifier in step S718. For example, when the NF is an SMF, the UE stores an association relationship between a UE ID and a PDU session ID/a DNN/S-NSSAI or an SMF ID. When the NF is a PCF or an LMF, the UE stores an association relationship between the UE ID and an NF ID.

S720: The UE sends an air interface message to a RAN #1 that serves the UE, and correspondingly, the RAN #1 receives the air interface message from the UE. The air interface message includes the information about the NF and a paging identifier. Optionally, the air interface message may further include a NAS message, for example, a service request, used to request to resume a connection between the RAN #1 and the NF.

It should be noted that the paging identifier is a paging identifier shared by all NFs. For example, the paging identifier may be a TMSI allocated by the AMF, or the paging identifier may be another identifier. However, the paging message #5 sent by the NF such as the SMF, a UE-PCF, or an SMSF to the RAN #1 carries a same paging identifier.

In this implementation, the UE determines and stores an NF ID that triggers paging on the UE.

S721: The RAN #1 sends an NG request to the NF, and correspondingly, the NF receives the NG request from the RAN #1.

For example, the RAN #1 initiates a connection resumption request to the NF corresponding to the information about the NF. For a specific implementation, refer to the related descriptions in the foregoing method 400 to method 600. For brevity, details are not described herein again.

In the solution provided in this application, a method for establishing a connection between a RAN and a first network element NF in a RAN service-based architecture scenario to obtain information about the NF is provided, to resolve a problem of how the RAN determines an NF that triggers paging, to resume a connection between the RAN and the NF. This can reduce a signaling transmission delay, reduce a quantity of signaling transmission hops, provide unified service discovery and service invoking, and quickly establish a data transmission connection.

The foregoing describes in detail embodiments of the connection management method side in this application with reference to FIG. 1 to FIG. 7A to FIG. 7C. The following describes in detail embodiments of a connection management apparatus side in this application with reference to FIG. 8 to FIG. 10. It should be understood that descriptions of the apparatus embodiments correspond to the descriptions of the method embodiments, and therefore for a part that is not described in detail, refer to the foregoing method embodiments.

FIG. 8 is a diagram of a structure of a connection management apparatus 1000 according to an embodiment of this application. As shown in FIG. 8, the apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a transceiver unit.

In a possible design, the apparatus 1000 may implement steps or procedures performed by the first network element in the foregoing method embodiments. The processing unit 1020 is configured to perform a processing-related operation of the first network element in the foregoing method embodiments, and the transceiver unit 1010 is configured to perform a receiving/sending-related operation of the first network element in the foregoing method embodiments.

For example, when a data transmission connection of a communication apparatus is disconnected and downlink data of the communication apparatus has not arrived, the transceiver unit 1010 is configured to send a first request message to a second network element, where the first request message is used to request connection information of the communication apparatus, the connection information is used to obtain information about one or more access network devices, and the one or more access network devices include an access network device that serves the communication apparatus; and receive the connection information from the second network element; and the processing unit 1020 is configured to: when the downlink data of the communication apparatus arrives, trigger resumption of the data transmission connection of the communication apparatus through the one or more access network devices.

In another possible design, the apparatus 1000 may implement steps or procedures performed by the second network element in the foregoing method embodiments. The transceiver unit 1010 is configured to perform a receiving/sending-related operation of the second network element in the foregoing method embodiments, and the processing unit 1020 is configured to perform a processing-related operation of the second network element in the foregoing method embodiments.

For example, the transceiver unit 1010 is configured to receive a first request message from a first network element, where the first request message is used to request connection information of a communication apparatus, the connection information is used to obtain information about one or more access network devices, and the one or more access network devices include an access network device that serves the communication apparatus; and the transceiver unit 1010 is further configured to send the connection information of the communication apparatus to the first network element, so that when downlink data of the communication apparatus arrives, the first network element triggers resumption of a data transmission connection of the communication apparatus through the one or more access network devices.

In still another possible design, the apparatus 1000 may implement steps or procedures performed by the communication apparatus in the foregoing method embodiments. The transceiver unit 1010 is configured to perform a receiving/sending-related operation of the communication apparatus in the foregoing method embodiments, and the processing unit 1020 is configured to perform a processing-related operation of the communication apparatus in the foregoing method embodiments.

For example, the transceiver unit 1010 is configured to: in a process of resuming a data transmission connection of the communication apparatus, receive, from an access network device, a message for paging the communication apparatus, where the message includes information about a first network element, and the first network element is a network element that triggers paging on the communication apparatus; and the transceiver unit 1010 is further configured to send, to the access network device, a message used to request to resume the data transmission connection of the apparatus, where the message includes the information about the first network element.

In still another possible design, the apparatus 1000 may implement steps or procedures performed by the access network device in the foregoing method embodiments. The transceiver unit 1010 is configured to perform a receiving/sending-related operation of the access network device in the foregoing method embodiments, and the processing unit 1020 is configured to perform a processing-related operation of the access network device in the foregoing method embodiments.

For example, in a process of resuming a data transmission connection of the communication apparatus, the processing unit 1020 is configured to obtain information about a first network element, where the first network element is a network element that triggers paging on the communication apparatus; and the transceiver unit 1010 is configured to send a first request message to the first network element, where the first request message is used to request to resume the data transmission connection of the communication apparatus.

It should be understood that the apparatus 1000 herein is embodied in a form of a function unit. The term "unit" herein may refer to an application specific integrated circuit (application specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that, the apparatus 1000 may be specifically a transmit end in the foregoing embodiments, and may be configured to perform procedures and/or steps corresponding to the transmit end in the foregoing method embodiments. Alternatively, the apparatus 2000 may be specifically a receive end in the foregoing embodiments, and may be configured to perform procedures and/or steps corresponding to the receive end in the foregoing method embodiments. To avoid repetition, details are not described herein again.

The apparatus 1000 in the foregoing solutions has a function of implementing corresponding steps performed by the transmit end in the foregoing methods, or the apparatus 1000 in the foregoing solutions has a function of implementing corresponding steps performed by the receive end in the foregoing methods. The function may be implemented by hardware, or may be implemented by hardware executing corresponding software. The hardware or the software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to separately perform receiving and sending operations and a related processing operation in the method embodiments.

In addition, the transceiver unit may alternatively be a transceiver circuit (for example, may include a receiving circuit and a sending circuit), and the processing unit may be a processing circuit. In this embodiment of this application, the apparatus in FIG. 7A to FIG. 7C may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

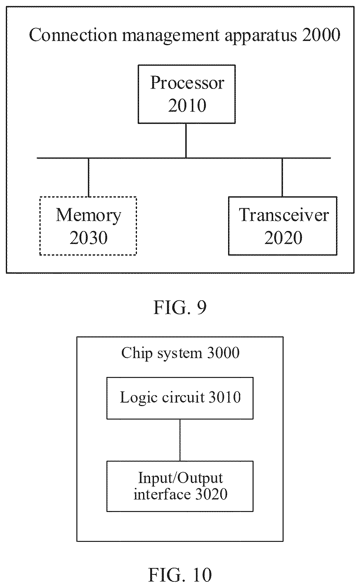

FIG. 9 is a diagram of a structure of a connection management apparatus 2000 according to an embodiment of this application. As shown in FIG. 9, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030 communicates with the processor 2010 and the transceiver 2020 through internal connection paths. The memory 2030 is configured to store instructions, and the processor 2010 may execute the instructions stored in the memory 2030.

In a possible implementation, the apparatus 2000 is configured to implement procedures and steps corresponding to the communication apparatus in the foregoing method embodiments.

In another possible implementation, the apparatus 2000 is configured to implement procedures and steps corresponding to the first network element in the foregoing method embodiments.

In still another possible implementation, the apparatus 2000 is configured to implement procedures and steps corresponding to the second network element in the foregoing method embodiments.

In still another possible implementation, the apparatus 2000 is configured to implement procedures and steps corresponding to the access network device in the foregoing method embodiments.

It should be understood that the apparatus 2000 may be specifically the transmit end or the receive end in the foregoing embodiments, or may be a chip or a chip system. Correspondingly, the transceiver 2020 may be a transceiver circuit of the chip. This is not limited herein. Specifically, the apparatus 2000 may be configured to perform steps and/or procedures corresponding to the transmit end or the receive end in the foregoing method embodiments.

Optionally, the memory 2030 may include a read-only memory and a random access memory, and provide instructions and data for the processor. A part of the memory may further include a non-volatile random access memory. For example, the memory may further store information about a device type. The processor 2010 may be configured to execute the instructions stored in the memory. When the processor 2010 executes the instructions stored in the memory, the processor 2010 is configured to perform steps and/or procedures in the foregoing method embodiments corresponding to the transmit end or the receive end.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor, an application specific integrated circuit, a field programmable gate array or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of an example but not limitative descriptions, many forms of RAMs are available, for example, a static random access memory, a dynamic random access memory, a synchronous dynamic random access memory, a double data rate synchronous dynamic random access memory, an enhanced synchronous dynamic random access memory, a synchlink dynamic random access memory, and a direct rambus random access memory. It should be noted that the memory of the systems and methods described in this specification includes but is not limited to these and any memory of another proper type.

FIG. 10 is a diagram of a structure of a chip system 3000 according to an embodiment of this application. As shown in FIG. 10, the chip system 3000 (which may also be referred to as a processing system) includes a logic circuit 3010 and an input/output interface (input/output interface) 3020.

The logic circuit 3010 may be a processing circuit in the chip system 3000. The logic circuit 3010 may be coupled to and connected to a storage unit, and invoke instructions in the storage unit, to enable the chip system 3000 to implement the methods and functions in embodiments of this application. The input/output interface 3020 may be an input/output circuit in the chip system 3000, and outputs information processed by the chip system 3000, or inputs to-be-processed data or signaling information into the chip system 3000 for processing.

In a solution, the chip system 3000 is configured to implement operations performed by the first network element in the foregoing method embodiments.

In a solution, the chip system 3000 is configured to implement operations performed by the second network element in the foregoing method embodiments.

In a solution, the chip system 3000 is configured to implement operations performed by the access network device in the foregoing method embodiments.

In a solution, the chip system 3000 is configured to implement operations performed by the communication apparatus in the foregoing method embodiments.

An embodiment of this application further provides a computer-readable storage medium. The computer-readable storage medium stores computer instructions used to implement the method performed by the first network element, the second network element, or the access network device in the foregoing method embodiments.

An embodiment of this application further provides a computer program product, including computer program code or instructions. When the computer program code or the instructions are run on a computer, the computer is enabled to implement the method performed by the first network element, the second network element, or the access network device in the foregoing method embodiments.

An embodiment of this application further provides a communication system, including the foregoing first network element and second network element, and optionally, may further include an access network device.

For explanations and beneficial effect of related content of any one of the apparatuses provided above, refer to the corresponding method embodiment provided above. Details are not described herein again.

For ease of understanding the foregoing embodiments provided in this application, the following descriptions are provided.

First, in this application, unless otherwise stated or there is a logic conflict, terms and/or descriptions in different embodiments are consistent and may be mutually referenced, and technical features in different embodiments may be combined based on an internal logical relationship thereof, to form a new embodiment.

Second, in this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. In text descriptions of this application, the character "/" usually indicates an "or" relationship between associated objects. "At least one of the following items (pieces)" or a similar expression thereof means any combination of these items, including a singular item (piece) or any combination of plural items (pieces). For example, at least one of a, b, and c may indicate a, b, c, a and b, a and c, b and c, or a, b, and c. Each of a, b, and c may be in a singular form or a plural form.

Third, in this application, "first", "second", and various numbers (for example, #1 and #2) are merely used for distinguishing for ease of description, and are not intended to limit the scope of embodiments of this application, for example, are intended to distinguish between different messages but not to describe a specific order or sequence. It should be understood that objects described in such a way are interchangeable in an appropriate circumstance, so that a solution other than embodiments of this application can be described.

Fourth, in this application, descriptions such as "when...", "in a case of...", and "if" all mean that a device performs corresponding processing in an objective case, and do not limit time, and the device is not required to perform a determining action during implementation. This does not mean that there is another limitation.

Fifth, in this application, "indicate" may include direct indication and indirect indication. When a piece of indication information indicates A, the indication information may directly indicate A or indirectly indicate A, but it does not indicate that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or may be different. A specific sending method is not limited in this application.

The "indication information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

Sixth, in this application, a "protocol" may be a standard protocol in the communication field, for example, may include a 5G protocol, an NR protocol, and a related protocol used in a future communication system. This is not limited in this application. "Predefined" may include being defined in advance, for example, protocol definition. "Pre-configured" may be implemented by pre-storing corresponding code or a corresponding table in a device, or may be implemented in another manner that may indicate related information. A specific implementation thereof is not limited in this application.

Seventh, in this application, "communication" may also be described as "data transmission", "information transmission", "data processing", or the like. "Transmission" includes "sending" and "receiving".

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit.

When the functions are implemented in the form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device to perform all or some of the steps of the methods described in embodiments of this application. The foregoing storage medium includes any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A connection management method, wherein the method is applied to a first network element, and the method comprises:
when a data transmission connection of a communication apparatus is disconnected and downlink data of the communication apparatus has not arrived, sending a first request message to a second network element, wherein the first request message is used to request connection information of the communication apparatus, the connection information is used to obtain information about one or more access network devices, and the one or more access network devices comprise an access network device that serves the communication apparatus;
receiving the connection information from the second network element; and
when the downlink data of the communication apparatus arrives, triggering resumption of the data transmission connection of the communication apparatus through the one or more access network devices.

2. The method according to claim 1, wherein the first network element is configured to manage the data transmission connection of the communication apparatus, or the first network element is configured to send the downlink data to the communication apparatus through the data transmission connection of the communication apparatus.

3. The method according to claim 1 or 2, wherein the triggering resumption of the data transmission connection of the communication apparatus through the one or more access network devices comprises:
sending, to the one or more access network devices, a message used to page the communication apparatus; and
receiving a second request message from the access network device that serves the communication apparatus, wherein the second request message is used to request to resume the data transmission connection of the communication apparatus.

4. The method according to claim 3, wherein the connection information is a paging area of the communication apparatus, and the one or more access network devices are located in the paging area; or
the connection information is the information about the one or more access network devices, and the one or more access network devices are located in a paging area of the communication apparatus.

5. The method according to claim 3 or 4, wherein before the receiving the second request message from the access network device that serves the communication apparatus, the method further comprises:
sending information about the first network element to the second network element, wherein the information about the first network element is used to determine that a network element that triggers paging on the communication apparatus is the first network element.

6. The method according to claim 3 or 4, wherein the message used to page the communication apparatus comprises information about the first network element, and the information about the first network element is used to determine that a network element that triggers paging on the communication apparatus is the first network element.

7. The method according to claim 1 or 2, wherein the connection information is information about the access network device that serves the communication apparatus; and
the triggering resumption of the data transmission connection of the communication apparatus through the one or more access network devices comprises:
sending, to the access network device that serves the communication apparatus, a message used to request to resume the data transmission connection of the communication apparatus.

8. The method according to any one of claims 1 to 7, wherein the first request message is further used to request to subscribe to connection information of the communication apparatus, so that the second network element sends updated connection information of the communication apparatus to the first network element when connection information of the communication apparatus is updated.

9. The method according to claim 8, wherein the method further comprises:
when the data transmission connection of the communication apparatus is resumed, canceling the subscription from the second network element.

10. The method according to any one of claims 1 to 9, wherein the second network element is configured to perform connection management on the communication apparatus, and before the sending the first request message to the second network element, the method further comprises:
sending a third request message to a third network element, wherein the third request message is used to request information about a network element that performs connection management on the communication apparatus; and
receiving information about the second network element from the third network element, wherein
the sending the first request message to the second network element comprises:
sending the first request message to the second network element based on the information about the second network element.

11. The method according to claim 10, wherein the third request message is further used to request to subscribe to the information about the network element that performs connection management on the communication apparatus, so that the third network element sends updated information about the network element to the first network element when the information about the network element that performs connection management on the communication apparatus is updated.

12. The method according to claim 11, wherein the method further comprises:
when the data transmission connection of the communication apparatus is resumed, canceling the subscription from the third network element.

13. A connection management method, wherein the method comprises:
obtaining information about a first network element, wherein the first network element is a network element that triggers paging on a communication apparatus; and
sending, to the first network element, a message used to request to resume a data transmission connection of the communication apparatus.

14. The method according to claim 13, wherein the obtaining the information about the first network element comprises:
sending a query message to a second network element, wherein the query message is used to query information about the network element that triggers paging on the communication apparatus, and the query message comprises an identifier of the communication apparatus; and
receiving the information about the first network element from the second network element.

15. The method according to claim 13, wherein before the obtaining the information about the first network element, the method comprises:
receiving, from the first network element, a message used to trigger paging on the communication apparatus, wherein the message comprises a paging identifier of the communication apparatus and the information about the first network element; and
storing an association relationship between the paging identifier and the information about the first network element; and
the obtaining the information about the first network element comprises:
receiving a request message from the communication apparatus, wherein the request message comprises the paging identifier, and the request message is used to request to resume the data transmission connection of the communication apparatus; and
determining the information about the first network element based on the association relationship and the paging identifier in the request message.

16. The method according to claim 13, wherein the obtaining the information about the first network element comprises:
receiving a request message from the communication apparatus, wherein the request message comprises the information about the first network element, and the request message is used to request to resume the data transmission connection of the communication apparatus.

17. A connection management method, wherein the method is applied to a second network element, and the method comprises:
receiving a first request message from a first network element, wherein the first request message is used to request connection information of a communication apparatus, the connection information is used to obtain information about one or more access network devices, and the one or more access network devices comprise an access network device that serves the communication apparatus; and
sending the connection information of the communication apparatus to the first network element based on a status of the communication apparatus, so that when downlink data of the communication apparatus arrives, the first network element triggers resumption of a data transmission connection of the communication apparatus through the one or more access network devices.

18. The method according to claim 17, wherein the sending the connection information of the communication apparatus to the first network element based on the status of the communication apparatus comprises:
when the communication apparatus is in a connected state, sending, to the first network element, information about the access network device that serves the communication apparatus; or
when the communication apparatus is in an idle state, sending, to the first network element, information used to obtain the one or more access network devices, wherein the one or more access network devices are configured to page the communication apparatus; or
when the communication apparatus is in an idle state, skipping sending the connection information of the communication apparatus to the first network element.

19. The method according to claim 18, wherein the sending, to the first network element, the information used to obtain the one or more access network devices comprises:
sending a paging area of the communication apparatus to the first network element, wherein the one or more access network devices are located in the paging area; or
sending the information about the one or more access network devices to the first network element, wherein the one or more access network devices are located in a paging area of the communication apparatus.

20. The method according to claim 18 or 19, wherein when the communication apparatus is in the idle state, and the connection information of the communication apparatus is not sent to the first network element, the method further comprises:
receiving, from the first network element, a message used to notify that data of the communication apparatus arrives; and
sending, to the one or more access network devices based on the message, a message used to page the communication apparatus, wherein the one or more access network devices are located in the paging area of the communication apparatus.

21. The method according to any one of claims 17 to 20, wherein before the receiving the first request message from the first network element, the method further comprises: sending an identifier of the communication apparatus and information about the second network element to a third network element, wherein the information about the second network element is used by the third network element to determine a network element that performs connection management on the communication apparatus.

22. The method according to any one of claims 17 to 21, wherein the method further comprises:
receiving a query message from the access network device that serves the communication apparatus, wherein the query message is used to query information about a network element that triggers paging on the communication apparatus, and the query message comprises the identifier of the communication apparatus; and
sending information about the first network element to the access network device based on the identifier of the communication apparatus in the query message and an association relationship between the identifier of the communication apparatus and the information about the first network element.

23. The method according to claim 22, wherein before the receiving the query message from the access network device that serves the communication apparatus, the method further comprises:
receiving the identifier of the communication apparatus and the information about the first network element from the first network element; and
storing the association relationship between the identifier of the communication apparatus and the information about the first network element.

24. A connection management method, wherein the method is applied to a communication apparatus, and the method comprises:
in a process of resuming a data transmission connection of the communication apparatus, receiving, from an access network device, a message for paging the communication apparatus, wherein the message comprises information about a first network element, and the first network element is a network element that triggers paging on the communication apparatus; and
sending, to the access network device, a message used to request to resume the data transmission connection of the communication apparatus, wherein the message comprises the information about the first network element.

25. A connection management method, wherein the method comprises:
when a data transmission connection of a communication apparatus is disconnected and downlink data of the communication apparatus has not arrived, sending, by a first network element, a first request message to a second network element, and receiving, by the second network element, the first request message from the first network element, wherein the first request message is used to request connection information of the communication apparatus, the connection information is used to obtain information about one or more access network devices, and the one or more access network devices comprise an access network device that serves the communication apparatus;
sending, by the second network element, the connection information to the first network element based on a status of the communication apparatus, and receiving, by the first network element, the connection information from the second network element; and
when the downlink data of the communication apparatus arrives, triggering, by the first network element, resumption of the data transmission connection of the communication apparatus through the one or more access network devices.

26. The method according to claim 25, wherein the sending, by the second network element, the connection information to the first network element based on the status of the communication apparatus comprises:
sending, by the second network element, the connection information to the first network element based on the status of the communication apparatus being an idle state, wherein the connection information is used to obtain information about one or more access network devices in a paging area of the communication apparatus; and
the triggering, by the first network element, resumption of the data transmission connection of the communication apparatus through the one or more access network devices comprises:
sending, by the first network element to the one or more access network devices, a message used to page the communication apparatus; and
receiving, by the first network element, a second request message from the access network device that serves the communication apparatus, wherein the second request message is used to request to resume the data transmission connection of the communication apparatus.

27. The method according to claim 25, wherein the sending, by the second network element, the connection information to the first network element based on the status of the communication apparatus comprises:
sending, by the second network element to the first network element based on the status of the communication apparatus being a connected state, information about the access network device that serves the communication apparatus; and
the triggering, by the first network element, resumption of the data transmission connection of the communication apparatus through the one or more access network devices comprises:
sending, by the first network element to the access network device that serves the communication apparatus, a message used to request to resume the data transmission connection of the communication apparatus.

28. The method according to any one of claims 25 to 27, wherein the second network element is configured to perform connection management on the communication apparatus, and before the sending, by the first network element, the first request message to the second network element, the method further comprises:
sending, by the first network element, a third request message to a third network element, and receiving, by the third network element, the third request message from the first network element, wherein the third request message is used to request information about a network element that performs connection management on the communication apparatus; and
sending, by the third network element, information about the second network element to the first network element, and receiving, by the first network element, the information about the second network element from the third network element, wherein
the sending, by the first network element, the first request message to the second network element comprises:
sending, by the first network element, the first request message to the second network element based on the information about the second network element.

29. A connection management apparatus, comprising one or more function modules, wherein the one or more function modules are configured to perform the method according to any one of claims 1 to 12, the one or more function modules are configured to perform the method according to any one of claims 13 to 16, the one or more function modules are configured to perform the method according to any one of claims 17 to 23, or the one or more function modules are configured to perform the method according to claim 24.

30. A connection management apparatus, comprising a processor, wherein the processor is coupled to a memory; and the processor is configured to execute a computer program stored in the memory, to enable the apparatus to perform the method according to any one of claims 1 to 12, enable the apparatus to perform the method according to any one of claims 13 to 16, enable the apparatus to perform the method according to any one of claims 17 to 23, or enable the apparatus to perform the method according to claim 24.

31. A communication system, comprising a first network element and a second network element, wherein the first network element is configured to perform the method according to any one of claims 1 to 12, and the second network element is configured to perform the method according to any one of claims 17 to 23.

32. A computer-readable storage medium, wherein the computer-readable storage medium stores a computer program; and when the computer program is run on a computer, the computer is enabled to perform the method according to any one of claims 1 to 12, the computer is enabled to perform the method according to any one of claims 13 to 16, the computer is enabled to perform the method according to any one of claims 17 to 23, or the computer is enabled to perform the method according to claim 24.

33. A computer program product, wherein when the computer program product runs on a computer, the computer is enabled to perform the method according to any one of claims 1 to 12, the computer is enabled to perform the method according to any one of claims 13 to 16, the computer is enabled to perform the method according to any one of claims 17 to 23, or the computer is enabled to perform the method according to claim 24.

34. A chip, comprising: at least one processor, wherein the at least one processor is coupled to a memory, the memory is configured to store a computer program, and the processor is configured to invoke the computer program from the memory and run the computer program, to enable an apparatus in which the chip is installed to perform the method according to any one of claims 1 to 12, enable the apparatus to perform the method according to any one of claims 13 to 16, enable the apparatus to perform the method according to any one of claims 17 to 23, or enable the apparatus to perform the method according to claim 24.
